# EUROPÄISCHE PATENTSCHRIFT

(11) **EP 2 430 330 B1**
(45) Veröffentlichungstag und Bekanntmachung des Hinweises auf die Patenterteilung: **17.04.2013**
(21) Anmeldenummer: 10721413.2
(22) Anmeldetag: 07.05.2010
(51) Int. Cl.: F16H 3/00, F16H 3/12

(54) **ANTRIEBSANORDNUNG MIT ZWEI EINGANGSSEITIGEN KUPPLUNGEN UND VERFAHREN ZUR BETRIEBEN DER ANTRIEBSANORDNUNG**
DRIVE ASSEMBLY COMPRISING TWO CLUTCHES AT THE INPUT END, AND METHOD FOR THE OPERATION THEREOF
DISPOSITIF D'ENTRAINEMENT COMPORTANT DEUX EMBRAYAGES COTE ENTREE ET PROCEDE POUR FAIRE FONCTIONNER LE DISPOSITIF D'ENTRAINEMENT

(30) Priorität: 14.05.2009 DE 102009003108
(43) Veröffentlichungstag der Anmeldung: 21.03.2012
(73) Patentinhaber: ZF Friedrichshafen AG, 88038 Friedrichshafen (DE)
(72) Erfinder: HUNOLD, Bernard, 88046 Friedrichshafen (DE); LUEBKE, Eckhardt, 88048 Friedrichshafen (DE)
(86) Internationale Anmeldenummer: PCT/EP2010/056243
(87) Internationale Veröffentlichungsnummer: WO 2010/130647

(56) Entgegenhaltungen:
- EP-A1- 1 921 349
- WO-A1-2007/134943
- WO-A2-01/88409
- WO-A2-03/085287

## Beschreibung

Die Erfindung betrifft eine Antriebsanordnung für ein Kraftfahrzeug, mit einem Getriebe, welches als lastschaltfähiges Gruppengetriebe ein Splittergetriebe und ein Hauptgetriebe umfasst, bei dem das Gruppengetriebe eine Getriebeeingangswelle und eine Getriebeausgangswelle aufweist, bei dem Getriebegänge bildende sowie auf Getriebewellen angeordnete Los- und Festräder vorhanden sind, bei dem Schaltvorrichtungen zum bedarfsweise drehfesten Koppeln der Losräder an zumindest einer der Getriebewellen vorhanden sind, bei dem das Splittergetriebe wenigstens eine erste und eine zweite Gangkonstante aufweist, und bei dem die Eingangsseiten der ersten und zweiten Gangkonstanten von den Ausgangsseiten einer zwei Kupplungen umfassenden Kupplungsvorrichtung antreibbar sind, deren Eingangsseiten von einem Antriebsmotor antreibbar sind.

Gruppengetriebe bestehen bekanntermaßen aus zwei oder mehr meist seriell angeordneten Getrieben, durch deren Kombination eine hohe Gangzahl realisierbar ist. Zunehmend werden sie als automatisierte Schaltgetriebe, beispielsweise bestehend aus einem Eingangsgetriebe bzw. Splittergetriebe, einem Hauptgetriebe und einer Nachschaltgruppe bzw. Bereichsgetriebe konzipiert. Derartige Getriebe finden insbesondere in Nutzkraftfahrzeugen Anwendung, da sie eine besonders feine Gangabstufung mit beispielsweise 12 oder 16 Gängen bieten und einen hohen Wirkungsgrad aufweisen. Bei einer geringeren Gangzahl sind auch Konfigurationen lediglich aus einem Hauptgetriebe und einen Splittergetriebe oder einem Hauptgetriebe und einem Bereichsgetriebe möglich. Zudem zeichnen sie sich im Vergleich zu manuellen Schaltgetrieben durch einen hohen Bedienungskomfort aus und sind im Vergleich zu konventionellen Automatgetrieben besonders wirtschaftlich in den Herstellungs- und Betriebskosten.

Bauartbedingt unterliegen herkömmliche Mehrgruppen-Schaltgetriebe, wie alle nicht unter Last schaltenden manuellen oder automatisierten Schaltgetriebe, einer Zugkraftunterbrechung beim Gangwechsel, da stets der Kraftfluss vom Antriebsmotor durch Öffnen einer Kupplung unterbrochen wird, um den eingelegten Gang lastfrei auszulegen, in einer Neutralstellung Getriebe und Antriebsmotor auf eine Anschlussdrehzahl zu synchronisieren und den Zielgang einzulegen. Dadurch entstehen Einschränkungen bezüglich der Fahrleistung aufgrund eines Geschwindigkeitsverlustes sowie gegebenenfalls ein erhöhter Kraftstoffverbrauch. Während sich die Zugkraftunterbrechungen bei Personenkraftfahrzeugen durch Einbußen in der Fahrdynamik in der Regel eher nur störend auswirken, beispielsweise bei einer sportlich orientierten Fahrweise, kann sich bei schweren Nutzfahrzeugen an Steigungen die Fahrgeschwindigkeit derart verzögern, dass ein Hochschalten in einen an sich gewünschten Zielgang unmöglich wird und es zu unerwünschten Rückschaltvorgängen, Kriechfahrten oder sogar zu zusätzlichen Anfahrvorgängen kommt.

Zur Abhilfe sind bereits Lösungen vorgeschlagen worden, die diese Zugkraftunterbrechungen reduzieren oder ganz vermeiden. Aus der DE 10 2006 024 370 A1 der Anmelderin, die als nächstliegender Stand der Technik angesehen wird, ist ein solches automatisiertes Mehrgruppengetriebe mit einem Splittergetriebe als Eingangsgetriebe, einem Hauptgetriebe und einer Bereichsgruppe als Ausgangs- oder Nachschaltgetriebe bekannt. Die Bauweise dieses bekannten Mehrgruppengetriebes mit dem Splittergetriebe und dem Hauptgetriebe ermöglicht die Schaltung eines Direktganges als ein Zwischengang während eines Gangwechsels. Dazu wird temporär eine direkte Verbindung einer Eingangswelle des Eingangsgetriebes mit einer Hauptwelle des Hauptgetriebes mittels einer Lastschaltkupplung hergestellt. Dadurch werden das Hauptgetriebe und die Splittergruppe lastfrei, so dass der eingelegte Gang ausgelegt, das Getriebe synchronisiert und der Zielgang eingelegt werden kann, während die Anfahrkupplung eingekuppelt bleibt. Die Lastschaltkupplung überträgt dabei ein Motormoment auf den Getriebeausgang, wobei ein freiwerdendes dynamisches Moment bei einer Drehzahlabsenkung zwischen Ursprungsgang und Zielgang genutzt wird, um den Zugkrafteinbruch weitgehend zu kompensieren.

Die als Reibkupplung ausgebildete Lastschaltkupplung des Mehrgruppengetriebes der DE 10 2006 024 370 A1 kann zwischen dem Eingangsgetriebe bzw. Splittergetriebe und dem Hauptgetriebe oder zwischen der reibschlüssigen Anfahrkupplung und dem Splittergetriebe angeordnet sein. Die Anfahrkupplung und die Lastschaltkupplung sind jedenfalls separat ausgebildet und angeordnet sowie über jeweils eine zugehörige Stelleinrichtung zu betätigen.

Ein weiteres Mehrgruppengetriebe ist aus der DE 10 2005 046 894 A1 der Anmelderin bekannt. Dieses Getriebe umfasst ein Hauptgetriebe und ein nachgeschaltetes Bereichsgetriebe. Ein Antriebsmotor ist über eine reibschlüssige Anfahr- oder Motorkupplung mit dem motorseitigen Ende einer Getriebeeingangswelle verbindbar. Die Getriebeeingangswelle ist wiederum mit einer Abtriebswelle des Getriebes über eine reibschlüssige Lastschaltkupplung verbindbar, die innerhalb des Bereichsgetriebes angeordnet ist. Dabei ist das andere Ende der Getriebeeingangswelle mit einer Eingangsseite der Lastschaltkupplung verbunden, und eine Ausgangswelle des Hauptgetriebes ist mit einer Ausgangsseite der Lastschaltkupplung gekoppelt.

Das Bereichsgetriebe ist in Planetenbauweise ausgebildet, wobei die Abtriebswelle mit einem Planetenträger verbunden und die Ausgangsseite der Lastschaltkupplung über ein Sonnenrad sowie einen von dem Planetenträger getragenen Planetenradsatz mit der Abtriebswelle koppelbar ist. Dadurch kann bei einem Schaltvorgang des Hauptgetriebes eine Zugkraftunterbrechung vermieden werden. Um bei einer Bereichsschaltung der Bereichsgruppe eine Zugkraftunterbrechung zu vermeiden, kann die Ausgangsseite der Lastschaltkupplung auch direkt mit dem Planetenträger und damit mit der Abtriebswelle verbunden sein. Dadurch sind auch Schaltvorgänge, die eine Bereichsschaltung beinhalten, zugkraftunterstützt. Auch bei diesem Mehrgruppengetriebe sind die Anfahrkupplung und die Lastschaltkupplung separat angeordnet und als Reibkupplungen ausgebildet.

Schließlich ist aus der nicht vorveröffentlichten deutschen Patentanmeldung DE 10 2008 001 200 ein Mehrgruppengetriebe eines Kraftfahrzeuges bekannt, bei dem Mittel zum Schalten eines Zwischengangs zur Verringerung oder Vermeidung von Zugkraftunterbrechungen bei Gangwechseln vorgesehen sind. Das Gruppengetriebe weist ein Eingangs- bzw. Splittergetriebe mit zwei Gangkonstanten, ein Hauptgetriebe mit drei weiteren Gangradsätzen sowie ein als Planetengetriebe ausgebildetes Bereichsgetriebe auf. Parallel zu einer Getriebeeingangswelle sind zwei Vorgelegewellen angeordnet, an denen die Festräder der Gangradsätze befestigt sind. Zwischen den beiden Gangradsätzen der Gangkonstanten des Splittergetriebe, zwischen dem Gangradsatz der zweiten Gangkonstante und dem ersten Gangradsatz des Hauptgetriebes sowie zwischen den beiden weiteren Gangradsätzen des Hauptgetriebes ist jeweils eine doppelseitig wirksame synchronisierte Schaltvorrichtung angeordnet, mit der Losräder der Gangradsätze mit zugeordneten Getriebewellen drehfest verbindbar sind.

Damit das Gruppengetriebe konstruktiv möglichst einfach und kompakt sowie einfach in der Steuerung und komfortabel sowie energiesparend im Betrieb ist, ist zwischen einem Antriebsmotor und einem Getriebeeingang eine zwei Reibkupplungen umfassende Doppelkupplungseinrichtung angeordnet, wobei die eine Kupplung als ein Anfahrelement zur Verbindung einer Antriebswelle des Antriebsmotors mit einer Getriebeeingangswelle und die andere Kupplung als ein Lastschaltelement zum Schalten eines Zwischenganges über eine Verbindung der Antriebswelle des Antriebsmotors mit einer die Getriebegruppen zumindest teilweise durchsetzenden Getriebehauptwelle ansteuerbar ist.

Vor diesem Hintergrund liegt der Erfindung die Aufgabe zugrunde, eine konstruktiv einfach und preiswert herstellbare Antriebsanordnung der zuletzt beschriebenen Art vorzuschlagen, bei der das Gruppengetriebe zumindest in seinen oberen Gängen lastschaltbar ist. Eine weitere Aufgabe besteht darin, ein Verfahren zum Betrieb einer solchen Antriebsanordnung anzugeben.

Die Lösung dieser Aufgabe ergibt sich aus den Merkmalen der unabhängigen Patentansprüche, während vorteilhafte Ausgestaltungen und Weiterbildungen der Erfindung den jeweils zugeordneten Unteransprüchen entnehmbar sind.

Der Erfindung liegt die Erkenntnis zugrunde, dass Klauenkupplungen im Vergleich zu Reibkupplungen einfacher aufgebaut und daher kostengünstiger herstellbar sind. Ein Gruppengetriebe mit einer zwei Kupplungen umfassenden Kupplungsvorrichtung, von denen eine Anfahr- und Schaltkupplung als Reibkupplung und eine zweite Kupplung als Klauenkupplung ausgebildet ist, ermöglicht bei einem sinnvollen Getriebeaufbau Lastschaltungen für Getriebegänge, bei denen das Splittergetriebe beteiligt ist, zumindest aber lastschaltbare Gangwechsel zwischen den beiden höchsten Getriebegängen, beispielsweise zwischen dem 11. und dem 12. Getriebegang.

Weiter liegt die Erkenntnis vor, dass sich durch die Anordnung einer als Reibkupplung ausgebildeten Anfahr- und Schaltkupplung sowie einer formschlüssigen Klauenkupplung in einem gemeinsamen Kupplungsgehäuse im Vergleich zu einer jeweils separaten Kupplungsausbildung axialer Bauraum einsparen lässt, wenn sowohl die Kupplungskomponenten als auch die Aktuatoren für die Betätigung dieser Kupplungen radial und axial geschachtelt innerhalb des Kupplungsgehäuses angeordnet werden.

Außerdem wurde die Erkenntnis gewonnen, dass bei dieser Anordnung von Reibkupplung und Klauenkupplung in einem gemeinsamen Kupplungsgehäuse die Schaltmittel der Klauenkupplung vorteilhaft mit einem vergleichsweise großen Wirkdurchmesser angeordnet werden können, so dass sich die Schaltmittel, also die geometrisch hierzu geeignet ausgebildeten Kupplungsklauen, bei einem Wegschalten der Aktuartorkraft leicht selbsttätig voneinander trennen können. Dies ist vor allen im Hinblick auf das Zusammenwirken der Antriebsanordnung mit einem Antiblockiersystem des Fahrzeugs von Vorteil, da durch eine schnell Unterbrechung des Vortriebs des Fahrzeugs die Wirkungsweise des Antiblockiersystem verbessert wird.

Die Erfindung geht demnach aus von einer Antriebsanordnung für ein Kraftfahrzeug, mit einem Getriebe, welches als lastschaltfähiges Gruppengetriebe mit einem Splittergetriebe, einem Hauptgetriebe und bedarfsweise einem Bereichsgetriebe ausgebildet ist, bei dem das Gruppengetriebe eine Getriebeeingangswelle und eine Getriebeausgangswelle aufweist, bei dem Getriebegänge bildende sowie auf Getriebewellen angeordnete Los- und Festräder vorhanden sind, bei dem Schaltvorrichtungen zum bedarfsweise drehfesten Koppeln der Losräder an zumindest einer der Getriebewellen vorhanden sind, bei dem das Splittergetriebe wenigstens zwei Gangkonstanten aufweist, und bei dem die Eingangsseiten der Gangkonstanten von den Ausgangsseiten einer zwei Kupplungen umfassenden Kupplungsvorrichtung antreibbar sind, deren Eingangsseiten von einem Antriebsmotor antreibbar sind.

Zur Lösung der gestellten Aufgabe ist hinsichtlich der Abtriebsanordnung außerdem vorgesehen, dass eine der beiden Kupplungen der Kupplungsvorrichtung als reibschlüssige Anfahr- und Schaltkupplung und die andere Kupplung als formschlüssige Klauenkupplung ausgebildet ist, dass mittels der Ausgangsseite der Anfahr- und Schaltkupplung wenigstens die Eingangsseiten der ersten und der zweiten Gangkonstanten alternativ zueinander antreibbar sind, und dass mittels der Ausgangsseite der Klauenkupplung die Eingangsseite einer der Gangkonstanten antreibbar ist.

In Weiterbildung der Erfindung sind das Splittergetriebe und das Hauptgetriebe mit der Getriebeeingangswelle, der Hauptgetriebewelle und zwei parallel dazu angeordneten Vorgelegewellen baulich zusammengefasst.

Weiter ist bei einer ersten Ausführungsvariante vorgesehen, dass die Kupplungsvorrichtung als Doppelkupplungsvorrichtung ausgebildet ist, welche die Anfahr- und Schaltkupplung, die Klauenkupplung sowie zwei den beiden Kupplungen jeweils zugeordnete Kupplungsaktuatoren umfasst, wobei die beiden Kupplungen ein gemeinsames Kupplungsgehäuse sowie ein gemeinsames Aktuatorgehäuse aufweisen, und wobei die Kupplungsmittel der Klauenkupplung gemäß einer bevorzugten Ausführungsform radial außen im Bereich des Kupplungsgehäuses angeordnet sind.

Durch die axial und radial eng benachbarte Anordnung der Kupplungsmittel von Anfahr- und Schaltkupplung sowie Klauenkupplung ist es möglich, deren Aktuatoren radial und axial geschachtelt zueinander anzuordnen, wodurch eine axial sehr kurze Doppelkupplungsanordnung geschaffen ist. Zudem kann bei dieser Konstruktion die Klauenschaltvorrichtung der Klauenkupplung radial sehr weit außen angeordnet werden, so dass vergleichsweise hohe Drehmomente über diese Klauenkupplung übertragbar sind. Außerdem ist die Anordnung der Verzahnungen der Klauenkupplung an einem möglichst großen Wirkdurchmesser vorteilhaft hinsichtlich geringer Selbsthaltekräfte bei angeschrägten Klauenzähnen. Schließlich wird durch die Anordnung der Klauenkupplung im Bauraum radial innerhalb der Anfahr- und Schaltkupplung das Gehäuse des Fahrgetriebes axial sehr kurz gehalten.

Hinsichtlich der Anfahr- und Schaltkupplung ist vorgesehen, dass diese eingangsseitig eine Tellerfeder aufweist, die an dem Kupplungsgehäuse befestigt und von einem Stellglied eines Aktuators betätigbar ist. Weiter weist die Anfahr- und Schaltkupplung eine Druckplatte auf, welche von der Tellerfeder im unbetätigten Zustand dieser Kupplung mit einer Schließkraft beaufschlagt wird. Außerdem weist die Druckplatte dieser Reibkupplung radiale Öffnungen auf, durch die an dem Kupplungsgehäuse angeordnete Ringsegmente mit Spiel nach radial innen hindurchragen. Auf die Funktion dieser Ringsegmente wird weiter unten eingegangen.

In weiterer Ausgestaltung der Antriebsanordnung ist vorgesehen, dass sowohl die Anfahr- und Schaltkupplung als auch die Klauenkupplung jeweils einen Torsionsschwingungsdämpfer aufweisen, mittels denen Drehschwingungen der Kurbelwelle einer die Antriebsanordnung antreibenden Brennkraftmaschine gedämpft werden. Die beiden Torsionsschwingungsdämpfer sind in dem Kupplungsgehäuse bevorzugt axial hintereinander angeordnet.

Die Eingangsseite des Torsionsschwingungsdämpfers der Anfahr- und Schaltkupplung ist mit einer Kupplungsscheibe verbunden, während die Ausgangsseite desselben über eine Hülse drehfest mit der Getriebeeingangswelle verbunden ist. Zudem ist vorgesehen, dass im Bereich des motorfernen Endes der Getriebeeingangswelle eine synchronisierte Schaltvorrichtung angeordnet ist, mittels der die Getriebeeingangswelle wechselweise mit einem Losrad der ersten Gangkonstante oder mit einem Losrad der zweiten Gangkonstante des Splittergetriebes verbindbar ist.

Der Torsionsschwingungsdämpfer der Klauenkupplung ist mit einer radial innen angeordneten Hohlwelle drehfest verbunden, die auf der Getriebeeingangswelle drehbar gelagert ist. Zudem ist vorgesehen, dass dieser Torsionsschwingungsdämpfer zumindest ein federelastisches Element aufweist und radial außen mit einer Mitnehmerscheibe verbunden ist, welche gemäß einer ersten Ausführungsvariante der Klauenkupplung im Bereich ihres radialen Endes eine stirnseitige Verzahnung aufweist, die als Kupplungsmittel der Klauenkupplung dient.

Hinsichtlich der bereits erwähnten Ringsegmente, welche die Druckplatte der Anfahr- und Schaltkupplung radial durchdringen, ist vorgesehen, dass diese an der radialen Innenseite des Kupplungsgehäuses angeordnet und mit diesem drehfest verbunden sind. Außerdem haben diese Ringsegmente an ihrer axial zur Mitnehmerscheibe ausgerichteten Stirnseite eine Stirnverzahnung, die ebenfalls als Kupplungsmittel der Klauenkupplung dient. Demnach greifen die Stirnverzahnung der Ringsegmente und die Stirnverzahnung der Mitnehmerscheibe im gekuppelten Zustand der Klauenkupplung formschlüssig derart ineinander, dass über diese ein Antriebsdrehmoment übertragbar ist.

Die kupplungsseitige Stirnverzahnung kann auch in den mit der Druckplatte der Kupplung verbundenen Teil der Kupplung integriert sein. Die Stirnverzahnung der Mitnehmerscheibe ist auch in Segmentbauweise ausführbar, wobei die Segmentierung beispielsweise über Zentrierungen an der Mitnehmerscheibe erfolgt.

Außerdem weist die Klauenkupplung in dieser ersten Ausführungsvariante einen Betätigungskolben des zugeordneten Aktuators auf, welcher zum Schließen der Klauenkupplung axial gegen eine verzahnungslose Stirnseite der Mitnehmerscheibe pressbar ist. Dabei ist bevorzugt vorgesehen, dass das zumindest eine federelastische Element des zweiten Torsionsschwingungsdämpfers derart ausgebildet ist, dass dieses eine axiale Auslenkung der Mitnehmerscheibe ermöglicht. In diesem Zusammenhang ist vorgesehen, dass das zumindest eine federelastische Element des Torsionsschwingungsdämpfers der Klauenkupplung derart ausgebildet ist, dass der Betätigungskolben des Aktuators der Klauenkupplung im unbetätigten Zustand von dem federelastischen Element in seine Öffnungsposition gedrückt wird. Durch dieses konstruktive Merkmal benötigt der Betätigungskolben des Aktuators der Klauenkupplung kein gesondertes Rückstellmittel, um aus seiner Betätigungsstellung in seine Nichtbetätigungsstellung gebracht zu werden.

Gemäß einem weiteren Konstruktionsmerkmal der ersten Ausführungsvariante einer Antriebsanordnung gemäß der Erfindung ist vorgesehen, dass die den Torsionsschwingungsdämpfers tragende Hohlwelle an ihrem getriebenahen Ende ein Abtriebszahnrad aufweist, welches als Losrad der ersten Gangkonstanten des Splittergetriebes dient. Die Hohlwelle ist vorzugsweise mittels eines Nadellagers auf der Getriebeeingangswelle und mittels eines Rillenkugellagers an einem Getriebegehäuse gelagert.

Gemäß einem weiteren Konstruktionsmerkmal der ersten Ausführungsvariante einer Antriebsanordnung gemäß der Erfindung ist vorgesehen, dass die Klauenkupplung radial sowie axial innerhalb des Bauraumes eines axialen Fortsatzes einer Druckplatte der reibschlüssigen Anfahr- und Schaltkupplung angeordnet ist. Dadurch wird der axial und radial vorteilhaft geschachtelte Aufbau der aus der Reibkupplung und der Klauenkupplung bestehenden Doppelkupplung erreicht.

Gemäß einer anderen Ausgestaltung der Erfindung ist vorgesehen, dass die Stirnverzahnungen an den Ringsegmenten des Kupplungsgehäuses und an der Mitnehmerscheibe der Klauenkupplung schräge Zahnflanken aufweisen. Dadurch sind die Zahnflanken selbstabweisend ausgebildet, so dass bei einem Unterschreiten eines durch die Zahnflankengeometrie und die Reibkräfte vorgegebenen geringen Drehmoments bzw. Haltemoments die Mitnehmerscheibe durch die Wirkung des federelastischen Elements des Torsionsschwingungsdämpfers der Klauenkupplung der Betätigungskolben in ihre Ausrückposition zurückgestellt wird.

Eine zweite Ausführungsvariante einer Antriebsanordnung gemäß der Erfindung sieht bei ansonsten weitgehend gleichem Aufbau im Bereich des Gruppengetriebes vor, dass bei der Kupplungsvorrichtung innerhalb ihres Kupplungsgehäuses die Anfahr- und Schaltkupplung vollständig sowie die Eingangsseite und der Torsionsschwingungsdämpfer der Klauenkupplung angeordnet sind. Weiter ist hierbei vorgesehen, dass innerhalb des mit dem Kupplungsgehäuse verbundenen Aktuatorgehäuses der Aktuator für die Anfahr- und Schaltkupplung angeordnet ist. Abweichend von dem konstruktiven Aufbau der oben erläuterten ersten Ausführungsform ist bei dieser zweiten Ausführungsvariante vorgesehen, dass die Kupplungsmittel der Klauenkupplung im Bereich des Losrades der ersten Gangkonstante angeordnet bzw. ausgebildet sind.

Diese zweite Ausführungsvariante wird als weniger vorteilhaft beurteilt als die erste Ausführungsform, weil die Kupplungsmittel der Klauenkupplung an einem vergleichsweise kleinen Wirkdurchmesser angeordnet sind, und weil die Kupplungsmittel der Klauenkupplung nicht im trockenen Bauraum des Kupplungsgehäuses sondern im nassen Bauraum des Splittergetriebes untergebracht sind. Dennoch weist diese zweite Ausführungsvariante gegenüber bekannten gattungsgemäßen Antriebsanordnungen den Vorteil einer kostengünstig herstellbaren und einen vergleichsweise kleinen axialen Bauraum benötigenden Klauenkupplung auf.

Bei dieser Klauenkupplung ist zur baulichen Funktionsfähigkeit vorgesehen, dass die mit dem Torsionsschwingungsdämpfer der Klauenkupplung ausgangsseitig verbundene Hohlwelle an ihrem getriebenahen Ende eine radial außen ausgebildete Axialverzahnung aufweist, wobei auf dieser Außenaxialverzahnung ein Schaltring mit seiner axialen Innenverzahnung axial beweglich aufgenommen ist. Der Schaltring weist an seiner zu dem Losrad der ersten Gangkonstante zeigenden Stirnseite eine Stirnverzahnung auf, die als weiteres Schaltmittel der Klauenkupplung mit einer dazu korrespondierenden Stirnverzahnung an dem Losrad der ersten Gangkonstante zusammenwirkt.

Der Schaltring der Klauenkupplung ist mittels eines Aktuators axial verschiebbar und über ein Ausrücklager an dem Getriebegehäuse abgestützt. Weiter ist bei dieser zweiten Ausführungsvariante der Antriebsanordnung gemäß der Erfindung vorgesehen, dass der Schaltring von einer Rückstellfeder mit einer von dem Losrad der ersten Gangkonstanten wegweisenden Kraft beaufschlagt wird, so dass bei einem Ausbleiben der Betätigungskraft des Aktuators der Klauenkupplung der Schaltring autonom aus der Schaltverzahnung des Losrades der ersten Gangkonstante herausgedrückt wird.

Auch bei dieser zweiten Ausführungsform der Klauenkupplung ist bevorzugt vorgesehen, dass die Stirnverzahnungen an dem Schaltring und an dem Losrad der ersten Gangkonstante axial ausgerichtete schräge Zahnflanken aufweisen, die je nach Auslegung ein Außereingriffbringen der Schaltmittel der Klauenkupplung begünstigen oder nicht.

Außerdem betrifft die Erfindung ein Verfahren zum Betreiben einer Antriebsanordnung mit einem Gruppengetriebe und einer zwei Kupplungen umfassenden Kupplungsvorrichtung, wobei eine dieser beiden Kupplungen als Reibkupplung und die andere Kupplung als Klauenkupplung ausgebildet ist, mit zumindest einigen der oben beschriebenen Merkmale. Um einen Schaltvorgang des Gruppengetriebes, an dem die erste und zweite Gangkonstante des Splittergetriebes beteiligt sind, frei von Zugkraftunterbrechungen durchzuführen, ist vorgesehen:
- dass in einem ersten Schritt das Antriebsdrehmoment ausschließlich über einen ersten Drehmomentweg geführt wird, der die reibschlüssige Anfahr- und Schaltkupplung, die Getriebeeingangswelle, das Losrad der zweiten Gangkonstanten und die Hauptgetriebewelle enthält,
- dass in einem zweiten Schritt die Anfahr- und Schaltkupplung in Schlupfbetrieb gebracht und die Drehzahl der Eingangsseite der Kupplungsvorrichtung nahe an eine Zieldrehzahl für den Zielgang gebracht wird,
- dass in einem dritten Schritt die Klauenkupplung geschlossen und das Antriebsdrehmoment über den ersten Drehmomentweg sowie über einen zweiten Drehmomentweg geführt wird, wobei in dem zweiten Drehmomentweg die Klauenkupplung, das Losrad der ersten Gangkonstanten, die Festräder der ersten und zweiten Gangkonstanten, das Losrad der zweiten Gangkonstanten und die Hauptgetriebewelle enthalten sind,
- und dass in einem vierten Schritt die Anfahr- und Schaltkupplung geöffnet und das Antriebsdrehmoment ausschließlich über den die Klauenkupplung enthaltenden zweiten Drehmomentweg zu der Hauptgetriebewelle geleitet wird.

Durch die kontinuierliche Aufrechterhaltung einer Drehmomentübertragung zwischen der Eingangsseite der Kupplungsvorrichtung und der Hauptgetriebewelle während des Schaltvorgangs wird ein zugkraftunterbrechungsfreier Schaltvorgang realisiert.

Zur Realisierung des ersten Drehmomentweges wird bei geschlossener Anfahr- und Schaltkupplung die Getriebeeingangswelle mittels einer zwischen der ersten und zweiten Gangkonstanten angeordneten Schaltvorrichtung mit dem Losrad der zweiten Gangkonstanten drehfest verbunden, und außerdem wird dieses Losrad der zweiten Gangkonstante mittels einer weiteren Schaltvorrichtung mit der Hauptgetriebewelle drehfest verbunden.

Zur Realisierung des zweiten Drehmomentweges ist vorgesehen, dass bei geschlossener Klauenkupplung und von der Ausgangsseite der Klauenkupplung angetriebenem Losrad der ersten Gangkonstante sowie geöffneter erster Schaltvorrichtung das Losrad der zweiten Gangkonstante mittels der weiteren Schaltvorrichtung mit der Hauptgetriebewelle drehfest verbunden wird.

Gemäß einer anderen Weiterbildung des Verfahrens gemäß der Erfindung ist vorgesehen, dass nach dem Schließen der Klauenkupplung die zwischen der ersten und der zweiten Gangkonstante angeordnete Schaltvorrichtung von ihrer Schließstellung an dem Losrad der zweiten Gangkonstante in ihre Neutralstellung geschaltet wird. Dies kann vorteilhaft für solche Betriebssituationen sein, in denen bei einem starken Abbremsvorgang, beispielsweise beim Ansprechen eines Antiblockiersystems des Fahrzeugs, eine schnelle Unterbrechung des Antriebsdrehmoments gewünscht ist. Durch den konstruktiven Aufbau der Klauenkupplung ist dies gewährleistet, da deren Schaltmittel beim Wegfall einer Betätigungskraft des zugeordneten Betätigungsaktuators von alleine außer Eingriff gelangen. Bei der in ihre Neutralstellung gestellten Schaltvorrichtung kann in einer solchen Betriebssituation unabhängig von der Betätigungsstellung der Anfahr- und Schaltkupplung kein Antriebsdrehmoment zu der Getriebeabtriebswelle weitergeleitet werden.

Schließlich kann verfahrensgemäß vorgesehen sein, dass nach dem Schalten der zwischen der ersten und zweiten Gangkonstanten angeordneten Schaltvorrichtung in ihre Neutralstellung die Anfahr- und Schaltkupplung geschlossen wird, so dass ein zugeordneter Kupplungsaktuator nicht ständig eine Betätigungskraft zum Offenhalten derselben bereitstellen muss.

Nachfolgend wird die Erfindung anhand von zwei Ausführungsbeispielen weiter erläutern. Hierzu dient auch eine beigefügte Zeichnung mit zwei Zeichnungsfiguren. In dieser zeigt
- Fig. 1: einen schematischen Längsschnitt durch eine Antriebsanordnung eines Kraftfahrzeuges mit einem als Gruppengetriebe ausgebildeten Fahrzeuggetriebe und durch eine eingangsseitige Kupplungsvorrichtung, sowie
- Fig. 2: einen Ausschnitt aus einer schematischen Längsschnittansicht durch eine Antriebsanordnung eines Kraftfahrzeuges im Bereich einer anders als in Fig. 1 ausgebildeten Kupplungsvorrichtung.

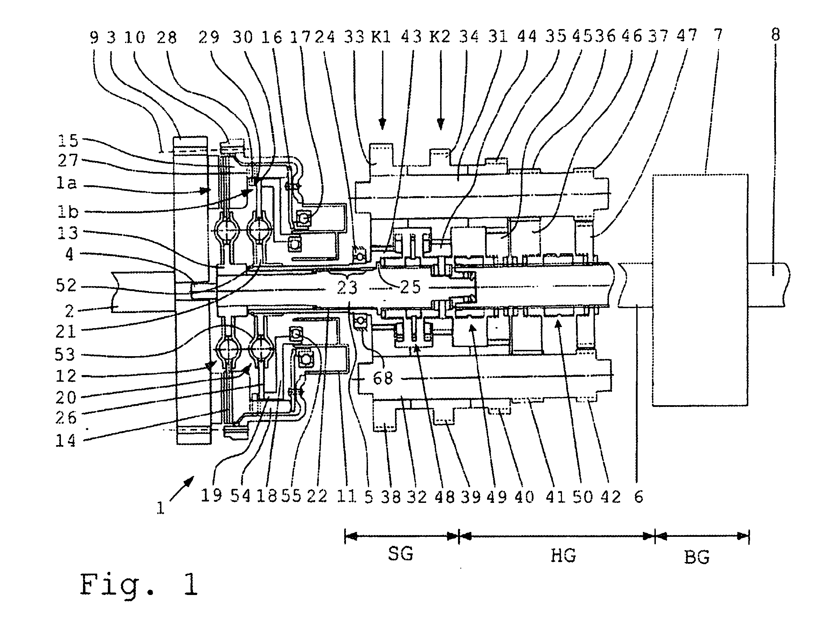

Demnach zeigt Fig. 1 ein erstes Ausführungsbeispiel einer erfindungsgemäß ausgebildeten Antriebsanordnung für ein Kraftfahrzeug, vorzugsweise für ein Nutzfahrzeug, mit einer als Doppelkupplung 1 a, 1b ausgebildeten Kupplungsvorrichtung 1 und einem als Gruppengetriebe SG, HG, BG ausgebildeten Stufenwechselgetriebe. Das Kupplungsgehäuse 10 der Kupplungsvorrichtung 1 ist über eine Schraubverbindung 9 mit einer Schwungsscheibe 3 verbunden, die drehfest an der Kurbelwelle 2 einer nicht dargestellten Brennkraftmaschine befestigt ist. Über das Kupplungsgehäuse 10 sind die Eingangsseiten der beiden Kupplungen 1 a, 1 b der Kupplungsvorrichtung 1 antreibbar.

Die Kupplungsvorrichtung 1 weist dabei eine als Reibkupplung ausgebildete Anfahr- und Schaltkupplung 1 a sowie eine unsynchronisierte Klauenkupplung 1 b auf. Die Ausgangsseite der Anfahr- und Schaltkupplung 1 a ist mit der Getriebeeingangswelle 5 drehfest verbunden, während die Ausgangsseite der Klauenkupplung 1 b an ihrem getriebeseitigen Ende ein Zahnrad 43 aufweist, welches als Losrad der ersten Gangkonstante K1 dient.

Das Gruppengetriebe weist ein Splittergetriebe SG mit zwei Gangkonstanten K1 und K2 auf, deren Losräder 43 bzw. 44 auf der Getriebeeingangswelle 5 drehbar gelagert und mit zugeordneten Festrädern 33, 34; 38, 39 auf zwei Vorgelegewellen 31, 32 in Zahneingriff sind. Das Losrad 43 der ersten Gangkonstante K1 ist dabei wie erwähnt mit dem Ausgang der Klauenkupplung 1 b drehfest verbunden und auf der Getriebeeingangswelle 5 drehbar gelagert.

Außerdem sind die Losräder 43 und 44 der beiden Gangkonstanten K1 und K2 mittels einer zweiseitig wirksamen synchronisierten Schaltvorrichtung 48 mit der Getriebeeingangswelle 5 drehfest verbindbar. Am antriebsmotornahen Ende des Gruppengetriebes SG, HB, BG ist die Getriebeeingangswelle 5 über ein Wälzlager 24 radial an einem Getriebegehäuse 68 abgestützt.

Weiter verfügt das Gruppengetriebe über ein Hauptgetriebe HG, welches drei Gangstufen mit auf einer Hauptgetriebewelle 6 drehbar angeordneten Losrädern 45, 46, 47 sowie jeweils zugeordneten Festräder 35, 36, 37; 40, 41, 42 auf den beiden Vorgelegewellen 31, 32 aufweist. Zum drehfesten Verbinden dieser Losräder 45, 46, 47 mit der Hauptgetriebewelle 6 sind jeweils zugeordnete Schaltvorrichtungen 49 und 50 vorgesehen, welche mit der Hauptgetriebewelle 6 drehfest und axialverschiebbar verbunden sind.

An dem Hauptgetriebe HG schließt sich ein Bereichsgetriebe BG an, welches hier nur schematisch dargestellt und als einfaches Planetengetriebe 7 ausgebildet ist. Die Eingangsseite dieses Bereichsgetriebes BG wird durch die Hauptgetriebewelle 6 gebildet, während als Ausgang dieses Bereichsgetriebes BG eine Getriebeausgangswelle 8 vorgesehen ist. Diese Getriebeausgangswelle 8 treibt ein nicht dargestelltes Achsgetriebe an, welches zu den Fahrzeugrädern führende Antriebswellen antreibt.

Von besonderer Bedeutung für die Antriebsanordnung gemäß der Erfindung ist die vor dem Gruppengetriebe SG, HG, BG angeordnete Kupplungsvorrichtung 1, da deren Konstruktion eine axial besonders kurze sowie radial klein bauende Antriebsanordnung ermöglicht. Während die als Reibkupplung ausgebildete Anfahr- und Schaltkupplung 1a schtupfbehaftete Anfahrvorgänge und Gangwechsel ermöglicht, gestattet die formschlüssig schaltbare Klauenkupplung eine Überbrückung der Anfahr- und Schaltkupplung 1 a, wodurch die Übertragung eines Antriebsdrehmomentes über einen zweiten Weg hinein in das Gruppengetriebe SG, HG, BG sowie zugkraftunterbrechungsfreie Schaltungen möglich sind.

Wie bereits erwähnt, ist die als Doppelkupplung ausgebildete Kupplungsvorrichtung 1 gemäß Fig. 1 eingangsseitig von der Kurbelwelle 2 einer Brennkraftmaschine antreibbar, welche über eine Schwungsscheibe 3 mit dem Kupplungsgehäuse 10 drehfest verbunden ist. Hierzu sitzt die Schwungscheibe 3 auch auf einem axialen Zapfen 4 der Getriebeeingangswelle 5, wobei sich letztere axial vollständig durch die Kupplungsvorrichtung 1 erstreckt.

Die als Reibkupplung ausgebildete Anfahr- und Schaltkupplung 1 a ist axial unmittelbar neben der Schwungsscheibe 3 angeordnet. Sie umfasst radial innen eine mit der Getriebeeingangswelle 5 drehfest verbundene Hülse 13, an der radial mittig ein erster Torsionsschwingungsdämpfer 12 ausgebildet ist. Die Federmittel dieses Torsionsschwingungsdämpfers 12 sind radial außen in an sich bekannter Weise mit einer Kupplungsscheibe 14 verbunden, welche mit ihrem Reibbelag von einer Druckplatte 15 axial gegen die Schwungscheibe 3 pressbar ist. Dazu ist die Druckplatte 15 radial innerhalb des Kupplungsgehäuses 10 angeordnet sowie an diesem axial geführt. Als Führungshilfen dienen vom Kupplungsgehäuse 10 radial nach innen mit Spiel durch radiale Öffnungen 27 in der Druckplatte 15 ragende Ringsegmente 28, denen noch eine weitere Bedeutung im Zusammenwirken mit der Klauenkupplung 1 b zukommt.

Die Druckplatte 15 der Anfahr- und Schaltkupplung 1 a wird von einer an dem Kupplungsgehäuse 10 schwenkbar befestigten Tellerfeder 16 ständig in Schließrichtung gegen die Kupplungsscheibe 14 gedrückt, so dass die Anfahr- und Schaltkupplung 1 a unbetätigt geschlossen ist. Zum Betätigen bzw. Öffnen der Anfahr- und Schaltkupplung 1 a wird ein nicht weiter dargestellter druckmittelbetätigter Aktuator aktiviert, der die Tellerfeder 16 über ein Ausrücklager 17 in ihre Öffnungsstellung bewegt. Das Ausrücklager 17 ist in einem für beide Kupplungen 1 a, 1 b gemeinsames Aktuatorgehäuse 11 angeordnet und an diesem abgestützt. Ein von der Kurbelwelle 2 kommendes Antriebsdrehmoment gelangt demnach über die Schwungsscheibe 3, das Kupplungsgehäuse 10, die Tellerfeder 16, die Druckplatte 15, die Kupplungsscheibe 14, den ersten Torsionsschwingungsdämpfer 12 und die Hülse 13 zur Getriebeeingangswelle 5.

Wie bereits erwähnt wurde, umfasst die als Doppelkupplung ausgebildete Kupplungsvorrichtung 1 auch eine unsynchronisierte Klauenkupplung 1 b, welche axial unmittelbar neben der als Reibkupplung ausgebildeten Anfahr- und Schaltkupplung 1 a angeordnet ist. Diese Klauenkupplung 1 b weist radial innen eine Hülse 21 auf, an der radial mittig ein zweiter Torsionsschwingungsdämpfer 20 ausgebildet ist. Die Hülse 21 der Klauenkupplung 1 b ist drehfest und durch einen Sicherungsring 52 axial fixiert mit einer Hohlwelle 22 verbunden, die auf der Getriebeeingangswelle 5 gleitgelagert oder wie im Ausführungsbeispiel der Fig. 1 mittels zwei Nadellager 23 wälzgelagert angeordnet ist. Die Hohlwelle 22 trägt an ihrem antriebsmotorfernen Ende das bereits erwähnte Losrad 43, welches über das Wälzlager 24 an dem Getriebegehäuse 68 radial gelagert ist. Außerdem stützt sich die Hohlwelle 22 im Bereich ihres Abtriebszahnrades bzw. des Losrades 43 axial an einem an der Getriebeeingangswelle 5 ausgebildeten Ringbund 25 ab.

Das zumindest eine federelastische Element 53 des zweiten Torsionsschwingungsdämpfers 20 ist radial außen mit einer Mitnehmerscheibe 26 verbunden und derart ausgelegt sowie angeordnet, dass die Mitnehmerscheibe 26 mit ihrem radial äußeren Ende axial in Richtung zu den bereits erwähnten Ringssegmenten 28 an dem Kupplungsgehäuse 10 auslenkbar ist.

Um eine solche axiale Auslenkung der Mitnehmerscheibe 26 zu erreichen, ist ein Kolben 18 eines nicht im Detail dargestellten druckmittelbetätigbaren Aktuators vorgesehen, der mit einem ringförmigen axialen Vorsprung 19 gegen die von der Anfahr- und Schaltkupplung 1 a wegweisenden Stirnseite der Mitnehmerscheibe 26 der Klauenkupplung 1 b pressbar ist. Hierzu ist der Kolben 18 des Aktuators der Klauenkupplung 1 b in einem Bereich der Kupplungsvorrichtung 1 angeordnet, welcher von einem axialen Fortsatz 54 der Druckplatte 15 der Anfahr- und Schaltkupplung 1 a sowohl radial als auch axial überdeckt wird. Der Kolben 18 ist zudem im gemeinsamen Aktuatorgehäuse 11 über ein Ausrücklager 55 axial verschiebbar gelagert und an diesem abgestützt.

Zur Ausbildung als Schaltelement einer unsynchronisierten Klauenkupplung 1b weist die Mitnehmerscheibe 26 an ihrer axial zu den Ringsegmenten 28 weisenden Stirnseite eine Verzahnung 30 auf, deren Zähne in ihrer Längserstreckung demnach radial nach außen gerichtet sind. Außerdem ist an den radial nach innen weisenden Ringsegmenten 28 jeweils eine dazu korrespondierende stirnseitige Verzahnung 29 ausgebildet. Ein Betätigen des Kolbens 18 des Aktuators der Klauenkupplung 1 b führt daher zu einem formschlüssigen Verbinden der Mitnehmerscheibe 26 mit den Ringsegmenten 28 bzw. letztlich mit dem Kupplungsgehäuse 10, so dass ein Antriebsdrehmoment von der Kurbelwelle 2 über die Schwungsscheibe 3, das Kupplungsgehäuse 10, die Ringsegmente 28, die Mitnehmerscheibe 26, die Hülse 21 und die Hohlwelle 22 zu dem Losrad 43 der ersten Gangkonstante K1 leitbar ist.

Wenn die Zähne der stirnseitigen Verzahnungen 29, 30 der Ringsegmente 28 und der Mitnehmerscheibe 26 schräge Zahnflanken aufweisen, also Zahnflanken, die von der Längsmittelachse der Antriebsanordnung weg weisen, dann wirkt die Klauenkupplung 1 b bei der Übertragung eines Drehmomentes autonom abweisend, so dass zum Geschlossenhalten der Klauenkupplung 1 b ständig eine Betätigungskraft am Kolben 18 des Klauenkupplungsaktuators aufrecht erhalten bleiben muss.

Vorteilhaft ist bei dieser Ausführungsform, dass bei einem Wegbleiben der Betätigungskraft die Klauenkupplung 1 b selbsttätig, also allein durch die Rückstellkraft der Federmittel 53 des zweiten Torsionsschwingungsdämpfers 20 und dem Abweisverhalten der Verzahnung, geöffnet wird. Zudem kann eine solche Klauenkupplung 1 b auch während der Übertragung eines hohen Drehmoments ohne große Betätigungskraft geöffnet und damit die Überbrückung der Anfahr- und Schaltkupplung 1 a ausgeschaltet werden. Die Anordnung der Schaltelemente (Stimverzahnungen 29, 30) an einem großen Wirkdurchmesser ist dazu besonders vorteilhaft.

Neben der am Ausführungsbeispiel der Fig. 1 erläuterten radialen Ausrichtung der Stirnverzahnungen 29, 30 an den Ringsegmenten 28 und an der Mitnehmerscheibe 26 können diese gemäß einer anderen Ausführungsform auch als Axialverzahnungen ausgebildet sein.

Sofern die Rückstellkraft des federelastischen Elements 53 des zweiten Torsionsschwingungsdämpfers 20 auf die Mitnehmerscheibe 26 bzw. den Kolben 18, 19 der Klauenkupplung 1 b nicht ausreicht, um diese bei Bedarf in ihre Nichtbetätigungsstellung zurückzuführen, so kann durch eine einfache konstruktive Maßnahme für diesen Zweck zumindest eine andere Rückstellfeder vorgesehen sein. Diese schiebt bei einem Wegfall des Betätigungsdrucks des Aktuators der Klauenkupplung 1 b den Betätigungskolben 18 aktiv in seine Nichtbetätigungsstellung, so dass die Verzahnungen 29, 30 an den Ringsegmenten 28 und an der Mitnehmerscheibe 26 außer Eingriff geraten.

Es wurde deutlich, dass durch die Anordnung der Klauenkupplung 1 b außerhalb des Getriebegehäuses, also im Trockenraum bzw. Kupplungsgehäuse 10 der Anfahr- und Schaltkupplung 1 a, keine getriebeseitigen Aktuatoren benötigt werden, um die Klauenkupplung ein- oder auszuschalten. Auch dieses verkürzt den Antriebsstrang in vorteilhafter Weise und reduziert die Komplexität des Getriebes SG, HG, BG.

Außerdem kann bei der vorgeschlagenen Kupplungsanordnung 1 die Klauenkupplung 1 b modulartig mit einer bereits vorhandenen Anfahr- und Schaltkupplung 1 a kombiniert werden, wobei sich die Klauenkupplung 1 b einseitig in das Kupplungsgehäuse 10 integrieren lässt. Zudem kann die hier vorgeschlagene Kupplungsanordnung 1 mit Anfahr- und Schaltkupplung 1 a sowie Klauenkupplung 1 b aus einer bereits vorhandenen Doppelkupplung konstruktiv abgeleitet werden.

Der beschriebene Aufbau der Kupplungsanordnung 1 gemäß Fig. 1 ermöglicht bei einem Gruppengetriebe mit einer eingangsseitigen Splittergetriebe SG mit zwei Gangkonstanten K1, K2 beispielsweise einen Gangwechsel zwischen der höchsten Gangstufe und der zweithöchsten Gangstufe des Gruppengetriebes ohne eine Zugkraftunterbrechung, worauf weiter unten im Zusammenhang mit der Betriebsweise von erfindungsgemäß ausgebildeten Antriebsanordnungen noch eingegangen wird.

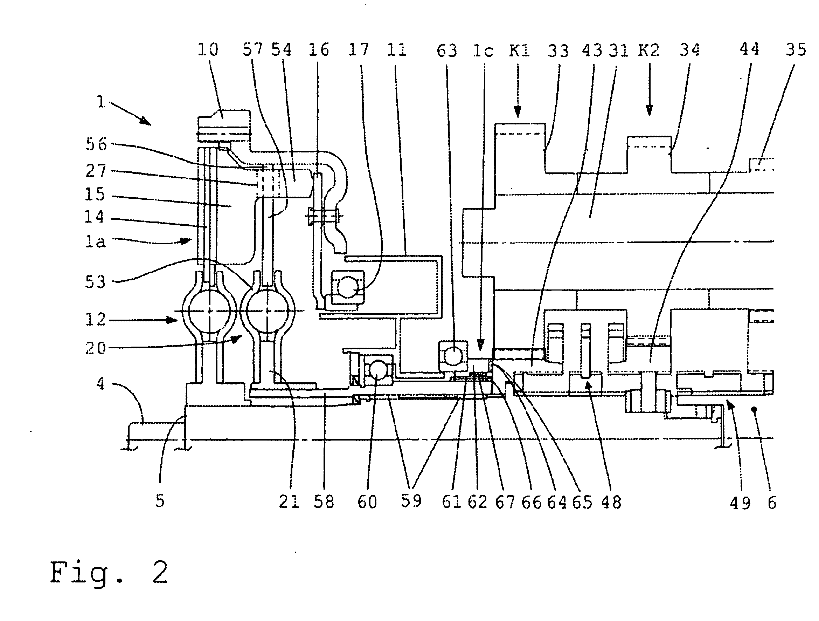

Fig. 2 zeigt eine Antriebsanordnung, die hinsichtlich des Gruppengetriebes SG, HG, BG sowie hinsichtlich der als Reibkupplung ausgebildeten Anfahr- und Schaltkupplung 1 a weitgehend identisch aufgebaut ist wie diejenige der Fig. 1. Insoweit sind fast alle vorgenannten Vorteile auch für diese Antriebsanordnung gemäß Fig. 2 gültig. Lediglich der Antrieb der ersten Gangkonstante K1 und damit zusammenhängend der konstruktive Aufbau der Klauenkupplung 1 c unterscheiden sich von der Antriebsanordnung gemäß Fig. 1.

Ebenso wie bei der Antriebsanordnung der Fig. 1 weist bei der Anfahr- und Schaltkupplung 1 a die Druckplatte 15 bzw. deren axialer Fortsatz 54 radial ausgerichtete Öffnungen 27 auf, die vorzugsweise gleichverteilt über den Umfang der Druckplatte 15 ausgebildet sind. Durch die Öffnungen 27 ragen radiale Stege 56 der Mitnehmerscheibe 57, die mit dem Kupplungsgehäuse 10 drehfest verbunden sind. Demnach wird ein Antriebsdrehmoment von dem Kupplungsgehäuse 10 beim Betrieb des Fahrzeugmotors ständig in die Mitnehmerscheibe 57 der Klauenkupplung 1 c und von dort über den zweiten Torsionsschwingungsdämpfers 53 und eine Hülse 21 eingeleitet. Die Hülse 21 ist mit einer Hohlwelle 58 drehfest verbunden, welche über ein zweireihiges Nadellager 59 auf der Getriebeeingangswelle 5 drehgelagert ist. Radial außen auf der Hohlwelle 58 ist ein als Rillenkugellager ausgebildetes Wälzlager 60 angeordnet, dessen Außenring sich am Gehäuse 11 des Aktuators und des Ausrücklagers 17 der Anfahr- und Schaltkupplung 1 a abstützt.

Zur Ausbildung der Schaltmittel einer Klauenkupplung 1 c verfügt die Hohlwelle 58 an ihrem antriebsmotorfernen Ende radial außen über eine Axialverzahnung 61, auf der ein Schaltring 62 mit seiner axialen Innenverzahnung axial verschiebbar angeordnet ist. Die Betätigung dieses Schaltringes 62 erfolgt mittels eines hier nicht dargestellten Aktuators, dessen Stellglied auf ein Ausrücklager 63 wirkt, dessen Innenring auf einem ringförmigen Absatz des Schaltringes 62 sitzt.

Der Schaltring 62 weist an seiner zu dem Losrad 43 der ersten Gangkonstante K1 zeigenden Stirnseite eine radial ausgerichtete Stirnverzahnung 64 auf, die in eine dazu korrespondierende Stirnverzahnung 65 an der zur Anfahr- und Schaltkupplung 1 a weisenden Stirnseite des Losrads 43 eingreifen kann. Eine Feder 67, die radial zwischen der Außenaxialverzahnung 61 der Hohlwelle 58 und dem Schaltring 62 angeordnet ist, stützt sich axial an dem Schaltring 62 und einem Anschlag 66 ab, welcher in Form eines Sicherungsringes in eine Ringnut in der Außenaxialverzahnung 61 der Hohlwelle 58 eingesetzt ist. Das Losrad 43 der ersten Gangkonstante K1 ist drehbar auf der Getriebeeingangswelle 5 gelagert und zur Leitung eines Antriebsdrehmoments über die erste Gangkonstante K1 mittels der Schaltvorrichtung 48 mit der Getriebeeingangswelle 5 drehfest verbindbar.

Im Folgenden wird die Betriebsweise der erfindungsgemäß ausgebildeten Antriebsanordnungen gemäß den Fig. 1 und 2 erläutert, wobei es für beide Antriebsanordnungen zutrifft, dass bei diesen die als Reibkupplung ausgebildete Anfahr- und Schaltkupplung 1 a hinsichtlich der Übertragung eines Antriebsdrehmomentes an das Fahrzeuggetriebe SG, HB, BG mittels der Klauenkupplung 1 b, 1 c überbrückbar ist. Außerdem sind beide vorgestellten Antriebsanordnungen in der Lage, die erste Gangkonstante K1 mittels der reibschlüssigen Anfahr- und Schaltkupplung 1 a oder mittels der Klauenkupplung 1 b, 1 c anzutreiben, während die zweite Gangkonstante K2 nur von der Anfahr- und Schaltkupplung 1 a antreibbar ist.

Zur Durchführung eines zugkraftunterbrechungsfreien Schaltvorgangs dieser ein Gruppengetriebe SP, HG und eine Reibkupplung 1 a sowie eine Klauenkupplung 1 b, 1c enthaltenden Antriebsanordnung ist unabhängig von der konkreten Ausführungsvariante gemäß den Fig. 1 und 2 vorgesehen,
- dass in einem ersten Schritt das Antriebsdrehmoment ausschließlich über einen ersten Drehmomentweg geführt wird, der die reibschlüssige Anfahr- und Schaltkupplung 1 a, die Getriebeeingangswelle 5, das Losrad 44 der zweiten Gangkonstante K2 und die Hauptgetriebewelle 6 enthält,
- dass in einem zweiten Schritt die Anfahr- und Schaltkupplung 1 a in Schlupfbetrieb gebracht und die Drehzahl der Eingangsseite der Kupplungsvorrichtung 1 nahe an eine Zieldrehzahl für den Zielgang gebracht wird,
- dass in einem dritten Schritt die Klauenkupplung 1 b, 1 c geschlossen und das Antriebsdrehmoment über den ersten Drehmomentweg sowie über einen zweiten Drehmomentweg geführt wird, wobei in dem zweiten Drehmomentweg die Klauenkupplung 1 b bzw. 1 c, das Losrad 43 der ersten Gangkonstante K1, die Festräder 33, 38; 34, 39 der beiden Gangkonstanten K1, K2, das Losrad 44 der zweiten Gangkonstante K2 und die Hauptgetriebewelle 6 enthalten sind,
- und dass in einem vierten Schritt die Anfahr- und Schaltkupplung 1 a geöffnet und das Antriebsdrehmoment ausschließlich über den die Klauenkupplung 1b; 1 c enthaltenden zweiten Drehmomentweg zu der Hauptgetriebewelle 6 geleitet wird.

Zur Realisierung des ersten Drehmomentweges wird bei geschlossener Anfahr- und Schaltkupplung 1 a die Getriebeeingangswelle 5 mittels einer zwischen den beiden Gangkonstanten K1, K2 angeordneten Schaltvorrichtung 48 mit dem Losrad 44 der zweiten Gangkonstante K2 drehfest verbunden, und außerdem wird dieses Losrad 44 der zweiten Gangkonstante K2 mittels einer weiteren Schaltvorrichtung 49 mit der Hauptgetriebewelle 6 drehfest gekoppelt.

Zur Realisierung des zweiten Drehmomentweges wird bei geschlossener Klauenkupplung 1 b, 1 c und von der Ausgangsseite der Klauenkupplung 1 b, 1 c angetriebenem Losrad 43 der ersten Gangkonstante K1 sowie geöffneter erster Schaltvorrichtung 48 das Losrad 44 der zweiten Gangkonstante K2 mittels der weiteren Schaltvorrichtung 49 mit der Hauptgetriebewelle 6 drehfest verbunden.

Das Schließen der Klauenkupplung 1 b, 1 c erfolgt vorzugsweise kurz vor dem Erreichen der Zieldrehzahl des neuen Getriebegangs, um so einen Drehzahlüberschwinger zu vermeiden. Die zwischen den beiden Gangkonstanten K1, K2 angeordnete Schaltvorrichtung 48 kann anschließend in ihrer Schaltposition an dem Losrad 44 der zweiten Gangkonstante K2 verbleiben oder in ihre Neutralstellung zurückgeführt werden. Sofern die Schaltvorrichtung 48 nach dem Einschalten der Klauenkupplung 1 b, 1 c in ihre Neutralposition gebracht wird, kann anschließend die Anfahr- und Schaltkupplung 1 a geschlossen werden, wodurch deren druckmittelbetriebener Aktuator entlastet wird.

Nachfolgend wird beschrieben, wie eine Zug-Rückschaltung von dem 12. und höchsten Getriebegang in den 11. Getriebegang bei einer Antriebsanordnung gemäß Fig. 1 ohne eine Unterbrechung der Drehmomentübertragung zwischen dem Getriebeeingang und dem Getriebeausgang durchgeführt wird.

Bei eingelegtem 12. Gang wird das von dem Fahrzeugmotor kommende Antriebsdrehmoment über das Kupplungsgehäuse 10, die geschlossenen reibschlüssige Anfahr- und Schaltkupplung 1 a, die Getriebeeingangswelle 5, die zu dem Losrad 44 der zweiten Gangkonstante K2 nach rechts verschobene Schiebemuffe der Schaltvorrichtung 48, das Losrad 44, die zu dem Losrad 44 der zweiten Gangkonstante K2 nach links verschobene Schiebemuffe der Schaltvorrichtung 49 und die Hauptgetriebewelle 6 zu dem Bereichsgetriebe BG und von dort zur Getriebeausgangswelle 8 geführt. Da das Losrad 44 der zweite Gangkonstante K2 über die zugeordneten Festräder 34, 39 auch die Vorgelegewellen 31, 32 antreibt, wird letztlich auch das Losrad 43 der ersten Gangkonstante K1 über diesem zugeordnete Festräder 33, 38 angetrieben. Die Klauenkupplung 1 b ist hierbei geöffnet, ihre eingangsseitigen Schaltmittel, also die radial an dem Kupplungsgehäuse 10 nach innen ragenden Ringsegmente 28, werden allerdings von dem Fahrzeugmotor über den Kupplungsgehäuse 10 mit dessen Drehzahl angetrieben.

Um eine zugkraftunterbrechungsfreie Zug-Rückschaltung vom 12. Gang in den 11. Gang durchzuführen, wird zunächst die Anfahr- und Schaltkupplung 1a kurzzeitig in einen Schlupfbetrieb gebracht und durch eine Einflussnahme auf das Leistungsstellglied des Fahrzeugmotors die Drehzahl der Getriebeeingangswelle 5 auf die Zieldrehzahl des 11. Gang angehoben.

Anschließend wird die Klauenkupplung 1 b durch Betätigen des Kolbens 19 geschlossen, so dass die Anfahr- und Schaltkupplung 1 a und die Klauenkupplung 1 b jeweils teilweise das Antriebsdrehmoment übertragen. Nachfolgend wird die Schiebemuffe der Schaltvorrichtung 48 von dem Losrad 44 der zweiten Gangkonstante K2 getrennt und in ihre Neutralstellung geschoben. Sodann wird die Anfahr- und Schaltkupplung 1 a vollständig geöffnet, so dass ausschließlich die Klauenkupplung 1 b das Antriebsdrehmoment über die erste Gangkonstante K1 auf die beiden Vorgelegewellen 31, 32 und von dort über die Zahnräder 34, 44 der zweiten Gangkonstante K2 auf die Hauptgetriebewelle 6 überträgt.

Daran anknüpfend wird nachfolgend beschrieben, wie eine Zug-Rückschaltung von dem 12. und höchsten Getriebegang in den 11. Getriebegang bei einer Antriebsanordnung gemäß Fig. 2 ohne eine Unterbrechung der Drehmomentübertragung zwischen dem Getriebeeingang und dem Getriebeausgang durchgeführt wird.

Bei eingelegtem 12. Gang wird das von dem Fahrzeugmotor kommende Antriebsdrehmoment über das Kupplungsgehäuse 10, die geschlossenen reibschlüssige Anfahr- und Schaltkupplung 1 a, die Getriebeeingangswelle 5, die zu dem Losrad 44 der zweiten Gangkonstante K2 nach rechts verschobene Schiebemuffe der Schaltvorrichtung 48, das Losrad 44, die zu dem Losrad 44 der zweiten Gangkonstante K2 nach links verschobene Schiebemuffe der Schaltvorrichtung 49 und die Hauptgetriebewelle 6 zu dem Bereichsgetriebe BG und von dort zur Getriebeausgangswelle 8 geführt. Da das Losrad 44 der zweiten Gangkonstante K2 über die zugeordneten Festräder 34, 39 auch die Vorgelegewellen 31, 32 antreibt, wird letztlich auch das Losrad 43 der ersten Gangkonstante K1 über diesem zugeordnete Festräder 33, 38 angetrieben. Die Klauenkupplung 1 c ist hierbei geöffnet, ihr Eingang, also die Mitnehmerscheibe 57, der Torsionsschwingungsdämpfer 20, die Hohlwelle 58 und der Schaltring 62 werden allerdings von dem Fahrzeugmotor über das Kupplungsgehäuse 10 mit dessen Drehzahl angetrieben.

Um eine zugkraftunterbrechungsfreie Zug-Rückschaltung vom 12. Gang in den 11. Gang durchzuführen, wird zunächst die Anfahr- und Schaltkupplung 1 a kurzzeitig in einen Schlupfbetrieb gebracht und durch eine Einflussnahme auf das Leistungsstellglied des Fahrzeugmotors die Drehzahl der Getriebeeingangswelle 5 auf die Zieldrehzahl des 11. Gang angehoben.

Anschließend wird die Klauenkupplung 1 c geschlossen, so dass über die Anfahr- und Schaltkupplung 1 a sowie die Klauenkupplung 1 c jeweils teilweise Drehmoment übertragen. Nachfolgend wird die Schiebemuffe der Schaltvorrichtung 48 von dem Losrad 44 der zweiten Gangkonstante K2 getrennt und in ihre Neutralstellung geschoben. Sodann wird die Anfahr- und Schaltkupplung 1 a vollständig geöffnet, so dass ausschließlich die Klauenkupplung 1 c das Antriebsdrehmoment über die Vorgelegewelle 31, 32 auf die Hauptgetriebewelle 6 überträgt.

### Bezugszeichen

- 1: Kupplungsvorrichtung
- 1a: Anfahr- und Schaltkupplung, reibschlüssige Kupplung
- 1b: Klauenkupplung
- 1c: Klauenkupplung
- 2: Kurbelwelle
- 3: Schwungscheibe
- 4: Zapfen an Getriebeeingangswelle
- 5: Getriebeeingangswelle
- 6: Hauptgetriebewelle
- 7: Planetengetriebe
- 8: Getriebeausgangswelle
- 9: Schraubverbindung
- 10: Kupplungsgehäuse
- 11: Aktuatorgehäuse
- 12: Erster Torsionsschwingungsdämpfer
- 13: Hülse des ersten Torsionsschwingungsdämpfers
- 14: Kupplungsscheibe der Anfahr- und Schaltkupplung
- 15: Druckplatte der Anfahr- und Schaltkupplung
- 16: Tellerfeder des Aktuators der Anfahr- und Schaltkupplung
- 17: Ausrücklager des Aktuators der Anfahr- und Schaltkupplung
- 18: Kolben des Aktuators der Klauenkupplung
- 19: Axialer Vorsprung des Kolbens 18
- 20: Zweiter Torsionsschwingungsdämpfer
- 21: Hülse des zweiten Torsionsschwingungsdämpfers
- 22: Hohlwelle
- 23: Wälzlager, Nadellager
- 24: Wälzlager
- 25: Ringbund
- 26: Mitnehmerscheibe an dem zweiten Torsionsschwingungsdämpfer
- 27: Radiale Öffnung in der Druckplatte der Anfahr- und Schaltkupplung
- 28: Ringssegment der Klauenkupplung
- 29: Stirnverzahnung am Ringsegment 28
- 30: Stirnverzahnung an Mitnehmerscheibe 26
- 31: Erste Vorgelegewelle
- 32: Zweite Vorgelegewelle
- 33, 34, 35, 36, 37: Festrad auf der ersten Vorgelegewelle
- 38, 39, 40, 41, 42: Festrad auf der zweiten Vorgelegewelle
- 43: Losrad auf Getriebeeingangswelle, Antriebszahnrad der K1
- 44: Losrad auf Getriebeeingangswelle
- 45, 46, 47: Losrad auf Hauptgetriebewelle
- 48: Schaltvorrichtung
- 49: Schaltvorrichtung
- 50: Schaltvorrichtung
- 51: Wälzlager
- 52: Sicherungsring
- 53: Federelastisches Element am zweiten Torsionsschwingungsdämpfer
- 54: Axialer Fortsatz der Druckplatte 15
- 55: Ausrücklager des Aktuators der Klauenkupplung
- 56: Radiale Stege der Mitnehmerscheibe 57
- 57: Mitnehmerscheibe der Klauenkupplung
- 58: Hohlwelle
- 59: Nadellager
- 60: Wälzlager, Rillenkugellager
- 61: Außenaxialverzahnung auf der Hohlwelle 58
- 62: Schaltring der Klauenkupplung
- 63: Ausrücklager der Klauenkupplung
- 64: Stirnverzahnung an dem Schaltring
- 65: Stirnverzahnung an dem Losrad bzw. Antriebszahnrad 43 der K1
- 66: Anschlag für Feder 67
- 67: Rückstellfeder
- 68: Getriebegehäuse

- SG: Splittergetriebe
- HG: Hauptgetriebe
- BG: Bereichsgetriebe
- K1: Erste Gangkonstante
- K2: Zweite Gangkonstante

## Patentansprüche

1. Antriebsanordnung für ein Kraftfahrzeug, mit einem Getriebe, welches als lastschaltfähiges Gruppengetriebe ein Splittergetriebe (SG) und ein Hauptgetriebe (HG) umfasst, bei dem das Gruppengetriebe (SG, HG) eine Getriebeeingangswelle (5) und eine Getriebeausgangswelle (8) aufweist, bei dem Getriebegänge bildende sowie auf Getriebewellen (5, 6, 31, 32) angeordnete Los- und Festräder vorhanden sind, bei dem Schaltvorrichtungen (48, 49, 50) zum bedarfsweise drehfesten Koppeln der Losräder (43, 44, 45, 46, 47) an zumindest einer der Getriebewellen (5, 6) vorhanden sind, bei dem das Splittergetriebe (SG) wenigstens eine erste Gangkonstante (K1) und eine zweite Gangkonstante (K2) aufweist, und bei dem die Eingangsseiten der ersten und zweiten Gangkonstanten (K1, K2) mit den Ausgangsseiten einer zwei Kupplungen umfassenden Kupplungsvorrichtung (1) antreibbar sind, deren Eingangsseiten von einem Antriebsmotor antreibbar sind, **dadurch gekennzeichnet, dass** eine der beiden Kupplungen der Kupplungsvorrichtung (1) als reibschlüssige Anfahr- und Schaltkupplung (1 a) und die andere Kupplung als formschlüssige Klauenkupplung (1b; 1 c) ausgebildet ist, dass mittels der Ausgangsseite der Anfahr- und Schaltkupplung (1 a) die Eingangsseiten der ersten und zweiten Gangkonstanten (K1, K2) alternativ zueinander antreibbar sind, und dass mittels der Ausgangsseite der Klauenkupplung (1b; 1 c) die Eingangsseite nur einer der Gangkonstanten (K1) antreibbar ist, und dass die Kupplungsvorrichtung (1) als Doppelkupplungsvorrichtung ausgebildet ist, welche die Anfahr- und Schaltkupplung (1 a), die Klauenkupplung (1 b) sowie zwei den beiden Kupplungen (1 a, 1 b) jeweils zugeordnete Kupplungsaktuatoren umfasst, dass die beiden Kupplungen (1 a, 1 b) einen gemeinsamen Kupplungsgehäuse (10) sowie ein gemeinsames Aktuatorgehäuse (11) aufweisen, und dass die Kupplungsmittel (28, 29) der Klauenkupplung (1 b) radial außen im Bereich des Kupplungsgehäuses (10) angeordnet sind.

2. Antriebsanordnung nach Anspruch 1, **dadurch gekennzeichnet, dass** das Splittergetriebe (SP) und das Hauptgetriebe (HG) baulich zusammengefasst sind und eine Getriebeeingangswelle (5), eine Hauptgetriebewelle (6) und zwei parallel dazu angeordnete Vorgelegewellen (31, 32) aufweisen.

3. Antriebsanordnung nach Anspruch 1 oder 2, **dadurch gekennzeichnet, dass** die Anfahr- und Schaltkupplung (1 a) eingangsseitig eine Tellerfeder (16) aufweist, die an dem Kupplungsgehäuse (10) befestigt ist und von einem Stellglied eines Aktuators betätigbar ist, dass die Anfahr- und Schaltkupplung (1 a) eine Druckplatte (15) aufweist, welche von der Tellerfeder (16) im unbetätigten Zustand dieser Kupplung (1 a) mit einer Schließkraft beaufschlagt wird, und dass die Druckplatte (15) radiale Öffnungen (27) aufweist, durch die an dem Kupplungsgehäuse (10) angeordnete Ringsegmente (28) mit Spiel nach radial innen hindurchragen.

4. Antriebsanordnung nach einem der Ansprüche 1 bis 3, **dadurch gekennzeichnet, dass** die Anfahr- und Schaltkupplung (1a) und die Klauenkupplung (1 b) jeweils einen Torsionsschwingungsdämpfer (12, 20) aufweisen, die radial innerhalb des Kupplungsgehäuses (10) angeordnet sind.

5. Antriebsanordnung nach Anspruch 4, **dadurch gekennzeichnet, dass** die Ausgangsseite des Torsionsschwingungsdämpfers (12) der Anfahr- und Schaltkupplung (1 a) über eine Hülse (13) drehfest mit der Getriebeeingangswelle (5) verbunden ist, und dass auf der Getriebeeingangswelle (5) eine Schaltvorrichtung (48) angeordnet ist, mittels der die Getriebeeingangswelle (5) wechselweise mit einem Losrad (43) der ersten Gangkonstante (K1) oder mit einem Losrad (44) der zweiten Gangkonstante (K2) verbindbar ist.

6. Antriebsanordnung nach Anspruch 4 oder 5, **dadurch gekennzeichnet, dass** der Torsionsschwingungsdämpfer (20) der Klauenkupplung (1 b) mit einer radial innen angeordneten Hohlwelle (22) drehfest verbunden ist, die auf der Getriebeeingangswelle (5) drehbar gelagert ist, dass der Torsionsschwingungsdämpfer (20) zumindest ein federelastisches Element (53) aufweist, und dass der Torsionsschwingungsdämpfer (20) radial außen mit einer Mitnehmerscheibe (26) verbunden ist, welche im Bereich ihres radialen Endes eine stirnseitige Verzahnung (30) aufweist.

7. Antriebsanordnung nach Anspruch 3, **dadurch gekennzeichnet, dass** die Ringsegmente (28) an der radialen Innenseite des Kupplungsgehäuses (10) angeordnet und mit diesem drehfest verbunden sind.

8. Antriebsanordnung nach einem der Ansprüche 3 bis 7, **dadurch gekennzeichnet, dass** die Ringsegmente (28) an ihrer axial zur Mitnehmerscheibe (26) ausgerichteten Stirnseite eine Stirnverzahnung (29) aufweisen.

9. Antriebsanordnung nach einem der Ansprüche 3 bis 8, **dadurch gekennzeichnet, dass** die Stirnverzahnungen (29, 30) der Ringsegmente (28) und der Mitnehmerscheibe (26) im gekuppelten Zustand der Klauenkupplung (1 b) ineinander greifen.

10. Antriebsanordnung nach einem der Ansprüche 1 bis 9, **dadurch gekennzeichnet, dass** die Klauenkupplung (1b) einen Betätigungskolben (18) des zugeordneten Aktuators aufweist, welcher zum Schließen der Klauenkupplung (1 b) axial gegen eine verzahnungslose Stirnseite der Mitnehmerscheibe (26) pressbar ist, wobei das zumindest eine federelastische Element (53) des zweiten Torsionsschwingungsdämpfers (20) derart ausgebildet ist, dass dieses eine axiale Auslenkung der Mitnehmerscheibe (26) ermöglicht.

11. Antriebsanordnung nach Anspruch 10, **dadurch gekennzeichnet, dass** das zumindest eine federelastische Element (53) des zweiten Torsionsschwingungsdämpfers (20) derart ausgebildet ist, dass der Betätigungskolben (18) des Aktuators der Klauenkupplung (1 b) im unbetätigten Zustand von dem federelastischen Element (53) in seine Öffnungsposition gedrückt wird.

12. Antriebsanordnung nach Anspruch 6, **dadurch gekennzeichnet, dass** die Hohlwelle (22) an ihrem getriebenahen Ende ein Zahnrad (43) aufweist, welches als Losrad (43) der ersten Gangkonstanten (K1) des Splittergetriebes (SP) dient.

13. Antriebsanordnung nach Anspruch 12, **dadurch gekennzeichnet, dass** die Hohlwelle (22) mittels eines Nadellagers (23) auf der Getriebeeingangswelle (5) und mittels eines Rillenkugellagers (24) an einem Getriebegehäuse (68) gelagert ist.

14. Antriebsanordnung nach einem der Ansprüche 1 bis 13, **dadurch gekennzeichnet, dass** die Klauenkupplung (1 b) radial sowie axial innerhalb des Bauraumes eines axialen Fortsatzes (54) einer Druckplatte (15) der reibschlüssigen Anfahr- und Schaltkupplung (1a) angeordnet ist.

15. Antriebsanordnung nach einem der Ansprüche 3 bis 14, **dadurch gekennzeichnet, dass** die Stirnverzahnungen (29, 30) an den Ringsegmenten (28) und an der Mitnehmerscheibe (26) axial ausgerichtete schräge Zahnflanken aufweisen.

16. Antriebsanordnung nach einem der Ansprüche 1 bis 15, **dadurch gekennzeichnet, dass** bei der Kupplungsvorrichtung (1) innerhalb ihres Kupplungsgehäuses (10) die Anfahr- und Schaltkupplung (1 a) vollständig sowie die Eingangsseite und der Torsionsschwingungsdämpfer (20) der Klauenkupplung (1 c) angeordnet sind, dass innerhalb des mit dem Kupplungsgehäuse (10) verbundenen Aktuatorgehäuse (11) der Aktuator für die Anfahr- und Schaltkupplung (1 a) angeordnet ist, und dass die Kupplungsmittel (64, 65) der Klauenkupplung (1 c) im Bereich des Losrades (43) der ersten Gangkonstante (K1) angeordnet bzw. ausgebildet sind.

17. Antriebsanordnung nach Anspruch 16, **dadurch gekennzeichnet, dass** die mit dem Torsionsschwingungsdämpfer (20) der Klauenkupplung (1 c) verbundene Hohlwelle (58) an ihrem getriebenahen Ende eine Außenaxialverzahnung (61) aufweist, dass auf dieser Außenaxialverzahnung (61) ein Schaltring (62) mit seiner axialen Innenverzahnung axial beweglich aufgenommen ist, dass der Schaltring (62) an seiner zu dem Losrad (43) der ersten Gangkonstante (K1) zeigenden Stirnseite eine Stirnverzahnung (64) aufweist, und dass an dem Losrad (43) der ersten Gangkonstante (K1) eine dazu korrespondierende Stirnverzahnung (65) ausgebildet ist.

18. Antriebsanordnung nach Anspruch 17, **dadurch gekennzeichnet, dass** der Schaltring (62) der Klauenkupplung (1 c) von einem Aktuator axial verschiebbar angeordnet und über ein Ausrücklager (63) an dem Getriebegehäuse (68) abgestützt ist.

19. Antriebsanordnung nach einem der Ansprüche 16 bis 18, **dadurch gekennzeichnet, dass** der Schaltring (62) von einer Rückstellfeder (67) mit einer von dem Losrad (43) der ersten Gangkonstanten (K1) wegweisenden Kraft beaufschlagt wird.

20. Antriebsanordnung nach einem der Ansprüche 16 bis 19, **dadurch gekennzeichnet, dass** die Stirnverzahnungen (64, 65) an dem Schaltring (62) und an dem Losrad (43) axial ausgerichtete schräge Zahnflanken aufweisen.

21. Verfahren zum Betreiben einer Antriebsanordnung mit einem Gruppengetriebe (SP, HG) und einer zwei Kupplungen umfassenden Kupplungsvorrichtung (1), wobei eine dieser beiden Kupplungen als Reibkupplung (1 a) und die andere Kupplung (1 b, 1 c) als Klauenkupplung ausgebildet ist, mit den Merkmalen von zumindest einem der Vorrichtungsansprüche 1 bis 20 und den folgenden Verfahrensschritten:
- dass zur Durchführung eines zugkraftunterbrechungsfreien Schaltvorgangs des Gruppengetriebes (SP, HG) in einem ersten Schritt das Antriebsdrehmoment ausschließlich über einen ersten Drehmomentweg geführt wird, der die reibschlüssige Anfahr- und Schaltkupplung (1a), die Getriebeeingangswelle (5), das Losrad (44) der zweiten Gangkonstante (K2) und die Hauptgetriebewelle (6) enthält,
- dass in einem zweiten Schritt die Anfahr- und Schaltkupplung (1a) in Schlupfbetrieb gebracht und die Drehzahl der Eingangsseite der Kupplungsvorrichtung (1) nahe an eine Zieldrehzahl für den Zielgang gebracht wird,
- dass in einem dritten Schritt die Klauenkupplung (1 b, 1 c) geschlossen und das Antriebsdrehmoment über den ersten Drehmomentweg sowie über einen zweiten Drehmomentweg geführt wird, wobei in dem zweiten Drehmomentweg die Klauenkupplung (1 b, 1 c), das Losrad (43) der ersten Gangkonstante (K1), die Festräder (33, 38; 34, 39) der ersten Gangkonstanten K1 und der zweiten Gangkostanten (K2), das Losrad (44) der zweiten Gangkonstante (K2) und die Hauptgetriebewelle (6) enthalten sind,
- und dass in einem vierten Schritt die Anfahr- und Schaltkupplung (1 a) geöffnet und das Antriebsdrehmoment ausschließlich über den die Klauenkupplung (1 b; 1 c) enthaltenden zweiten Drehmomentweg zu der Hauptgetriebewelle (6) geleitet wird.

22. Verfahren nach Anspruch 21, **dadurch gekennzeichnet, dass** zur Realisierung des ersten Drehmomentweges bei geschlossener Anfahr- und Schaltkupplung (1 a) die Getriebeeingangswelle (5) mittels einer zwischen der ersten und der zweiten Gangkonstanten (K1, K2) angeordneten Schaltvorrichtung (48) mit dem Losrad (44) der zweiten Gangkonstante (K2) drehfest verbunden wird, und außerdem dieses Losrad (44) der zweiten Gangkonstante (K2) mittels einer weiteren Schaltvorrichtung (49) mit der Hauptgetriebewelle (6) drehfest verbunden wird.

23. Verfahren nach Anspruch 21, **dadurch gekennzeichnet, dass** zur Realisierung des zweiten Drehmomentweges bei geschlossener Klauenkupplung (1 b, 1 c) und von der Ausgangsseite der Klauenkupplung (1 b, 1 c) angetriebenem Losrad (43) der ersten Gangkonstante (K1) sowie geöffneter erster Schaltvorrichtung (48) das Losrad (44) der zweiten Gangkonstante (K2) mittels der weiteren Schaltvorrichtung (49) mit der Hauptgetriebewelle (6) drehfest verbunden wird.

24. Verfahren einem der Ansprüche 21 bis 23, **dadurch gekennzeichnet, dass** nach dem Schließen der Klauenkupplung (1 b, 1 c) die zwischen der ersten und der zweiten Gangkonstante (K1, K2) angeordnete Schaltvorrichtung (48) aus ihrer Schließstellung an dem Losrad (44) der zweiten Gangkonstante (K2) in ihre Neutralstellung geschaltet wird.

25. Verfahren einem der Ansprüche 21 bis 24, **dadurch gekennzeichnet, dass** nach dem Schalten der Schaltvorrichtung (48) in ihre Neutralstellung die Anfahr- und Schaltkupplung (1 a) geschlossen wird.

## Claims

1. Drive assembly for a motor vehicle, having a transmission which comprises as a group transmission, which is able to shift under load, a splitter transmission (SG) and a main transmission (HG), in the case of which the group transmission (SG, HG) has a transmission input shaft (5) and a transmission output shaft (8), in the case of which loose and fixed wheels which form transmission gears and are arranged on transmission shafts (5, 6, 31, 32) are present, in the case of which shift devices (48, 49, 50) are present for, where necessary, rotationally conjoint coupling of the loose wheels (43, 44, 45, 46, 47) to at least one of the transmission shafts (5, 6), in the case of which the splitter transmission (SG) has at least a first gear constant (K1) and a second gear constant (K2), and in the case of which the input sides of the first and second gear constants (K1, K2) can be driven with the output sides of a clutch device (1) comprising two clutches, the input sides of which clutch device (1) can be driven by a drive motor, **characterized in that** one of two clutches of the clutch device (1) is formed as frictionally engaged starting and shift clutch (1a) and the other clutch as a positive-locking jaw clutch (1b; 1c), that the input sides of the first and second gear constants (K1, K2) can be driven alternatively to one another by means of the output side of the starting and shift clutch (1a), and that the input side of only one of the gear constants (K1) can be driven by means of the output side of the jaw clutch (1b; 1c), and that the clutch device (1) is formed as a dual clutch device which comprises the starting and shift clutch (1a), the jaw clutch (1b) and two clutch actuators assigned in each case to the two clutches (1a, 1b), that both clutches (1a, 1b) have a shared clutch housing (10) and a shared actuator housing (11), and that the clutch means (28, 29) of the jaw clutch (1b) are arranged radially outside in the region of the clutch housing (10).

2. Drive assembly according to Claim 1, **characterized in that** the splitter transmission (SP) and the main transmission (HG) are structurally combined and have a transmission input shaft (5), a main transmission shaft (6) and two countershafts (31, 32) arranged parallel thereto.

3. Drive assembly according to Claim 1 or 2, **characterized in that** the starting and shift clutch (1a) has a disc spring (16) on the input side which is fastened on the clutch housing (10) and can be activated by an actuating element of an actuator, that the starting and shift clutch (1a) has a pressure plate (15) which is acted upon with a closing force by the disc spring (16) in the unactivated state of said clutch (1a), and that the pressure plate (15) has radial openings (27) through which the ring segments (28) arranged on the clutch housing (10) protrude radially inwards with play.

4. Drive assembly according to one of Claims 1 to 3, **characterized in that** the starting and shift clutch (1a) and the jaw clutch (1b) have in each case a torsional vibration damper (12, 20) which is arranged radially within the clutch housing (10).

5. Drive assembly according to Claim 4, **characterized in that** the output side of the torsional vibration damper (12) of the starting and shift clutch (1a) is connected via a sleeve (13) in a rotationally conjoint manner to the transmission input shaft (5), and that a shift device (48) is arranged on the transmission input shaft (5), by means of which shift device (48) the transmission input shaft (5) can be alternately connected to a loose wheel (43) of the first gear constant (K1) or to a loose wheel (44) of the second gear constant (K2).

6. Drive assembly according to Claim 4 or 5, **characterized in that** the torsional vibration damper (20) of the jaw clutch (1b) is connected in a rotationally conjoint manner to a hollow shaft (22) which is arranged radially on the inside and rotatably mounted on the transmission input shaft (5), that the torsional vibration damper (20) has at least one spring-elastic element (53), and that torsional vibration damper (20) is connected radially on the outside to a driver disc (26) which has a face-side toothing (30) in the region of its radial end.

7. Drive assembly according to Claim 3, **characterized in that** the ring segments (28) are arranged on the radial inside of the clutch housing (10) and are connected in a rotationally conjoint manner to said clutch housing (10).

8. Drive assembly according to one of Claims 3 to 7, **characterized in that** the ring segments (28) have a spur toothing (29) on their face side aligned axially with respect to the driver disc (26).

9. Drive assembly according to one of Claims 3 to 8, **characterized in that** the spur toothings (29, 30) of the ring segments (28) and of the driver disc (26) in the coupled state of the jaw clutch (1b) engage in one another.

10. Drive assembly according to one of Claims 1 to 9, **characterized in that** the jaw clutch (1b) has an activation piston (18) of the assigned actuator which, in order to close the jaw clutch (1b), can be pressed axially against a toothing-free face side of the driver disc (26), wherein the at least one spring-elastic element (53) of the second torsional vibration damper (20) is formed such that this enables an axial deflection of the driver disc (26).

11. Drive assembly according to Claim 10, **characterized in that** the at least one spring-elastic element (53) of the second torsional vibration damper (20) is formed such that the activation piston (18) of the actuator of the jaw clutch (1b) in the unactivated state is pressed by the spring-elastic element (53) into its opening position.

12. Drive assembly according to Claim 6, **characterized in that** the hollow shaft (22) has, at its end close to the transmission, a gear wheel (43) which serves as a loose wheel (43) of the first gear constant (K1) of the splitter transmission (SP).

13. Drive assembly according to Claim 12, **characterized in that** the hollow shaft (22) is mounted by means of a needle bearing (23) on the transmission input shaft (5) and by means of a groove ball bearing (24) on a transmission housing (68).

14. Drive assembly according to one of Claims 1 to 13, **characterized in that** the jaw clutch (1b) is arranged radially and axially within the installation space of an axial projection (54) of a pressure plate (15) of the frictionally engaged starting and shift clutch (1a).

15. Drive assembly according to one of Claims 3 to 14, **characterized in that** the spur toothings (29, 30) have axially aligned oblique tooth flanks on the ring segments (28) and on the driver disc (26).

16. Drive assembly according to one of Claims 1 to 15, **characterized in that**, in the case of the clutch device (1), the starting and shift clutch (1a) is arranged fully and the input side and the torsional vibration damper (20) of the jaw clutch (1c) are arranged inside the clutch housing (10) of said clutch device (1), that the actuator for the starting and shift clutch (1a) is arranged within the actuator housing (11) connected to the clutch housing (10), and that the clutch means (64, 65) of the jaw clutch (1c) are arranged or formed in the region of the loose wheel (43) of the first gear constant (K1).

17. Drive assembly according to Claim 16, **characterized in that** the hollow shaft (58) connected to the torsional vibration damper (20) of the jaw clutch (1c) has, at its end close to the transmission, an outer axial toothing (61), that a shift ring (62) is axially movably received with its axial inner toothing on this outer axial toothing (61), that the shift ring (62) has a spur toothing (64) on its face side which points towards the loose wheel (43) of the first gear constant (K1), and that a corresponding spur toothing (65) is formed at the loose wheel (43) of the first gear constant (K1).

18. Drive assembly according to Claim 17, **characterized in that** the shift ring (62) of the jaw clutch (1c) is arranged so as to be axially displaceable by an actuator and is supported on the transmission housing (68) via a clutch release bearing (63).

19. Drive assembly according to one of Claims 16 to 18, **characterized in that** the shift ring (62) is acted upon by a restoring spring (67) with a force pointing away from the loose wheel (43) of the first gear constant (K1).

20. Drive assembly according to one of Claims 16 to 19, **characterized in that** the spur toothings (64, 65) have axially aligned oblique tooth flanks on the shift ring (62) and on the loose wheel (43).

21. Method for operating a drive assembly with a group transmission (SP, HG) and a clutch device (1) comprising two clutches, wherein one of these two clutches is formed as a friction clutch (1a) and the other clutch (1b, 1c) is formed as a jaw clutch, with the features of at least one of device claims 1 to 20 and the following method steps:
- that, in order to carry out a tractive force interruption-free shifting operation of the group transmission (SP, HG), in a first step, the drive torque is guided exclusively via a first torque path which contains the frictionally engaged starting and shift clutch (1a), the transmission input shaft (5), the loose wheel (44) of the second gear constant (K2) and the main transmission shaft (6),
- that, in a second step, the starting and shift clutch (1a) is moved into slip mode and the rotational speed of the input side of the clutch device (1) is moved close to a target rotational speed for the target gear,
- that, in a third step, the jaw clutch (1b, 1c) is closed and the drive torque is guided via the first torque path and via a second torque path, wherein the jaw clutch (1b, 1c), the loose wheel (43) of the first gear constant (K2), the fixed wheels (33, 38; 34, 39) of the first gear constant K1 and of the second gear constant (K2), the loose wheel (44) of the second gear constant (K2) and the main transmission shaft (6) are contained in the second torque path,
- and that, in a fourth step, the starting and shift clutch (1a) is opened and the drive torque is conducted exclusively via the second torque path which contains the jaw clutch (1b; 1c) to the main transmission shaft (6).

22. Method according to Claim 21, **characterized in that**, in order to produce the first torque path with a closed starting and shift clutch (1a), the transmission input shaft (5) is connected in a rotationally conjoint manner to the loose wheel (44) of the second gear constant (K2) by means of a shift device (48) arranged between the first and the second gear constant (K1, K2), and moreover this loose wheel (44) of the second gear constant (K2) is connected in a rotationally conjoint manner to the main transmission shaft (6) by means of a further shift device (49).

23. Method according to Claim 21, **characterized in that**, in order to produce the second torque path with a closed jaw clutch (1b, 1c) and the loose wheel (43) of the first gear constant (K1) driven by the output side of the jaw clutch (1b, 1c) and an open first shift device (48), the loose wheel (44) of the second gear constant (K2) is connected in a rotationally conjoint manner to the main transmission shaft (6) by means of the further shift device (49).

24. Method according to one of Claims 21 to 23, **characterized in that**, after closing of the jaw clutch (1b, 1c), the shift device (48) arranged between the first and the second gear constant (K1, K2) is shifted out of its closing position at the loose wheel (44) of the second gear constant (K2) into its neutral position.

25. Method according to one of Claims 21 to 24, **characterized in that**, after the shifting of the shift device (48) into its neutral position, the starting and shift clutch (1a) is closed.

## Revendications

1. Dispositif d'entraînement pour un véhicule automobile, comprenant une transmission qui comprend, en tant que transmission à groupe relais à capacité de commutation de charge, une boîte de vitesses à doubleur de gamme (SG) et une boîte de vitesses principale (HG), la transmission à groupe relais (SG, HG) présentant un arbre d'entrée de boîte de vitesses (5) et un arbre de sortie de boîte de vitesses (8), des pignons fous et des pignons fixes, formant des rapports de transmission et disposés sur des arbres de transmission (5, 6, 31, 32) étant prévus, des dispositifs de commutation (48, 49, 50) pour accoupler au besoin de manière fixée en rotation les pignons fous (43, 44, 45, 46, 47) à au moins l'un des arbres de transmission (5, 6) étant prévus, la boîte de vitesses à doubleur de gamme (SG) présentant au moins une première constante de rapport (K1) et une deuxième constante de rapport (K2), et les côtés d'entrée des première et deuxième constantes de rapport (K1, K2) pouvant être entraînés avec les côtés de sortie d'un dispositif d'embrayage (1) comprenant deux embrayages, dont les côtés d'entrée peuvent être entraînés par un moteur d'entraînement, **caractérisé en ce que** l'un des deux embrayages du dispositif d'embrayage (1) est réalisé sous forme d'embrayage de démarrage et de changement de vitesse (1a) à engagement par friction et l'autre embrayage est réalisé sous forme d'embrayage à griffes à engagement positif (1b ; 1c), **en ce que**, par l'intermédiaire du côté de sortie de l'embrayage de démarrage et de changement de vitesse (1a), les côtés d'entrée des première et deuxième constantes de rapport (K1, K2) peuvent être entraînés en alternance l'un par rapport à l'autre, et **en ce que**, par l'intermédiaire du côté de sortie de l'embrayage à griffes (1b ; 1c), le côté d'entrée de seulement l'une des constantes de rapport (K1) peut être entraîné, et **en ce que** le dispositif d'embrayage (1) est réalisé sous forme de dispositif à double embrayage qui comprend l'embrayage de démarrage et de changement de vitesse (1a), l'embrayage à griffes (1b) ainsi que deux actionneurs d'embrayage associés à chaque fois aux deux embrayage (la, 1b), **en ce que** les deux embrayages (la, 1b) présentent un boîtier d'embrayage commun (10) ainsi qu'un boîtier d'actionneur commun (11) et **en ce que** les moyens d'embrayage (28, 29) de l'embrayage à griffes (1b) sont disposés radialement à l'extérieur dans la région du boîtier d'embrayage (10).

2. Dispositif d'entraînement selon la revendication 1, **caractérisé en ce que** la boîte de vitesses à doubleur de gamme (SG) et la boîte de vitesses principale (HG) sont assemblées l'une à l'autre par leur construction et présentent un arbre d'entrée de boîte de vitesses (5), un arbre de transmission principal (6) et deux arbres intermédiaires (31, 32) disposés parallèlement à celui-ci.

3. Dispositif d'entraînement selon la revendication 1 ou 2, **caractérisé en ce que** l'embrayage de démarrage et de changement de vitesse (1a) présente, du côté de l'entrée, un ressort Belleville (16) qui est fixé sur le boîtier d'embrayage (10) et qui peut être actionné par un organe de commande d'un actionneur, **en ce que** l'embrayage de démarrage et de changement de vitesse (1a) présente une plaque de pression (15) qui est sollicitée avec une force de fermeture par le ressort Belleville (16) dans l'état non actionné de cet embrayage (1a), et **en ce que** la plaque de pression (15) présente des ouvertures radiales (27) à travers lesquelles pénètrent radialement vers l'intérieur avec jeu des segments annulaires (28) disposés sur le boîtier d'embrayage (10).

4. Dispositif d'entraînement selon l'une quelconque des revendications 1 à 3, **caractérisé en ce que** l'embrayage de démarrage et de changement de vitesse (1a) et l'embrayage à griffes (1b) présentent chacun un amortisseur d'oscillations de torsion (12, 20), lesquels sont disposés radialement à l'intérieur du boîtier d'embrayage (10).

5. Dispositif d'entraînement selon la revendication 4, **caractérisé en ce que** le côté de sortie de l'amortisseur d'oscillations de torsion (12) de l'embrayage de démarrage et de changement de vitesse (1a) est connecté par le biais d'un manchon (13) de manière solidaire en rotation à l'arbre d'entrée de boîte de vitesses (5), et **en ce que** sur l'arbre d'entrée de boîte de vitesses (5) est disposé un dispositif de commutation (48) au moyen duquel l'arbre d'entrée de boîte de vitesses (5) peut être connecté en alternance à un pignon fou (43) de la première constante de rapport (K1) ou à un pignon fou (44) de la deuxième constante de rapport (K2).

6. Dispositif d'entraînement selon la revendication 4 ou 5, **caractérisé en ce que** l'amortisseur d'oscillations de torsion (20) de l'embrayage à griffes (1b) est connecté de manière solidaire en rotation à un arbre creux (22) disposé radialement à l'intérieur, qui est monté à rotation sur l'arbre d'entrée de boîte de vitesses (5), **en ce que** l'amortisseur d'oscillations de torsion (20) présente au moins un élément élastique à ressort (53) et **en ce que** l'amortisseur d'oscillations de torsion (20) est connecté radialement à l'extérieur à un disque d'entraînement (26) qui présente, dans la région de son extrémité radiale, une denture droite (30).

7. Dispositif d'entraînement selon la revendication 3, **caractérisé en ce que** les segments annulaires (28) sont disposés sur le côté interne radial du boîtier d'embrayage (10) et sont connectés de manière solidaire en rotation à celui-ci.

8. Dispositif d'entraînement selon l'une quelconque des revendications 3 à 7, **caractérisé en ce que** les segments annulaires (28) présentent sur leur côté frontal orienté axialement par rapport au dispositif d'entraînement (26) une denture droite (29).

9. Dispositif d'entraînement selon l'une quelconque des revendications 3 à 8, **caractérisé en ce que** les dentures droites (29, 30) des segments annulaires (28) et du disque d'entraînement (26) viennent en prise les unes dans les autres dans l'état accouplé de l'embrayage à griffes (1b).

10. Dispositif d'entraînement selon l'une quelconque des revendications 1 à 9, **caractérisé en ce que** l'embrayage à griffes (1b) présente un piston d'actionnement (18) de l'actionneur associé, qui peut être pressé pour fermer l'embrayage à griffes (1b) axialement contre un côté frontal sans denture du disque d'entraînement (26), l'au moins un élément élastique à ressort (53) du deuxième amortisseur d'oscillations de torsion (20) étant réalisé de telle sorte que celui-ci permette une déviation axiale du disque d'entraînement (26).

11. Dispositif d'entraînement selon la revendication 10, **caractérisé en ce que** l'au moins un élément élastique à ressort (53) du deuxième amortisseur d'oscillations de torsion (20) est réalisé de telle sorte que le piston d'actionnement (18) de l'actionneur de l'embrayage à griffes (1b) soit pressé dans l'état non actionné par l'élément élastique à ressort (53) dans sa position d'ouverture.

12. Dispositif d'entraînement selon la revendication 6, **caractérisé en ce que** l'arbre creux (22) présente sur son extrémité proche de la transmission, une roue dentée (43) qui sert de pignon fou (43) de la première constante de rapport (K1) de la boîte de vitesses à doubleur de gamme (SG).

13. Dispositif d'entraînement selon la revendication 12, **caractérisé en ce que** l'arbre creux (22) est supporté au moyen d'un palier à aiguilles 23) sur l'arbre d'entrée de boîte de vitesses (5) et au moyen d'un palier rainuré à billes (24) sur un boîtier de la transmission (68).

14. Dispositif d'entraînement selon l'une quelconque des revendications 1 à 13, **caractérisé en ce que** l'embrayage à griffes (1b) est disposé radialement et axialement à l'intérieur de l'espace de construction d'une projection axiale (54) d'une plaque de pression (15) de l'embrayage de démarrage et de changement de vitesse (1a) à engagement par friction.

15. Dispositif d'entraînement selon l'une quelconque des revendications 3 à 14, **caractérisé en ce que** les dentures droites (29, 30) sur les segments annulaires (28) et sur le disque d'entraînement (26) présentent des flancs de dents obliques orientés axialement.

16. Dispositif d'entraînement selon l'une quelconque des revendications 1 à 15, **caractérisé en ce que**, dans le cas du dispositif d'embrayage (1), l'embrayage de démarrage et de changement de vitesse (1a) est complètement disposé à l'intérieur de son boîtier d'embrayage (10) ainsi que le côté d'entrée et l'amortisseur d'oscillations de torsion (20) de l'embrayage à griffes (1c), **en ce qu'**à l'intérieur du boîtier d'actionneur (11) connecté au boîtier d'embrayage (10) est disposé l'actionneur pour l'embrayage de démarrage et de changement de vitesse (1a), et **en ce que** les moyens d'embrayage (64, 65) de l'embrayage à griffes (1c) sont disposés ou réalisés dans la région du pignon fou (43) de la première constante de rapport (K1).

17. Dispositif d'entraînement selon la revendication 16, **caractérisé en ce que** l'arbre creux (58) connecté à l'amortisseur d'oscillations de torsion (20) de l'embrayage à griffes (1c) présente, à son extrémité proche de la transmission, une denture axiale extérieure (61), **en ce que** sur cette denture axiale extérieure (61) est reçue de manière déplaçable axialement avec sa denture axiale interne une bague de commutation (62), **en ce que** la bague de commutation (62) présente, sur son côté frontal tourné vers le pignon fou (43) de la première constante de rapport (K1), une denture droite (64), et **en ce que** sur le pignon fou (43) de la première constante de rapport (K1) est réalisée une denture droite (65) correspondant à celle-ci.

18. Dispositif d'entraînement selon la revendication 17, **caractérisé en ce que** la bague de commutation (62) de l'embrayage à griffes (1c) est disposée de manière déplaçable axialement par un actionneur et est supportée par le biais d'un palier de débrayage (63) sur le boîtier de transmission (68).

19. Dispositif d'entraînement selon l'une quelconque des revendications 16 à 18, **caractérisé en ce que** la bague de commutation (62) est sollicitée par un ressort de rappel (67) avec une force orientée à l'opposé du pignon fou (43) de la première constante de rapport (K1).

20. Dispositif d'entraînement selon l'une quelconque des revendications 16 à 19, **caractérisé en ce que** les dentures droites (64, 65) sur la bague de commutation (62) et sur le pignon fou (43) présentent des flancs de dents obliques orientés axialement.

21. Procédé pour faire fonctionner un dispositif d'entraînement comprenant une transmission à groupe relais (SG, HG) et un dispositif d'embrayage (1) comprenant deux embrayages, l'un des deux embrayages étant réalisé sous forme d'embrayage à friction (1a) et l'autre embrayage (1b, 1c) étant réalisé sous forme d'embrayage à griffes, comprenant les caractéristiques d'au moins l'une des revendications de dispositif 1 à 20 et les étapes de procédé suivantes :
- pour la mise en oeuvre d'une opération de commutation de la transmission à groupe relais (SG, HG) sans interruption de la force de traction, dans une première étape, le couple d'entraînement est exclusivement guidé par le biais d'une première voie de couple qui contient l'embrayage de démarrage et de changement de vitesse (1a) à engagement par friction, l'arbre d'entrée de boîte de vitesses (5), le pignon fou (44) de la deuxième constante de rapport (K2) et l'arbre de transmission principal (6),
- dans une deuxième étape, l'embrayage de démarrage et de changement de vitesse (1a) est amené en mode de glissement et la vitesse de rotation du côté d'entrée du dispositif d'embrayage (1) est rapprochée d'une vitesse de rotation cible pour le rapport cible,
- dans une troisième étape, l'embrayage à griffes (1b, 1c) est fermé et le couple d'entraînement est guidé par le biais de la première voie de couple et par le biais d'une deuxième voie de couple, dans la deuxième voie de couple étant contenus l'embrayage à griffes (1b, 1c), le pignon fou (43) de la première constante de rapport (K1), les pignons fixes (33, 38 ; 34, 39) de la première constante de rapport (K1) et de la deuxième constante de rapport (K2), le pignon fou (44) de la deuxième constante de rapport (K2) et l'arbre de transmission principal (6),
- et dans une quatrième étape, l'embrayage de démarrage et de changement de vitesse (1a) est ouvert et le couple d'entraînement est transmis exclusivement par le biais de la deuxième voie de couple contenant l'embrayage à griffes (1b ; 1c) à l'arbre de transmission principal (6).

22. Procédé selon la revendication 21, **caractérisé en ce que** pour réaliser la première voie de couple, lorsque l'embrayage de démarrage et de changement de vitesse (la) est fermé, l'arbre d'entrée de boîte de vitesses (5) est connecté de manière solidaire en rotation au moyen d'un dispositif de commutation (48) disposé entre les première et deuxième constantes de rapport (K1, K2) au pignon fou (44) de la deuxième constante de rapport (K2), et en outre ce pignon fou (44) de la deuxième constante de rapport (K2) est connecté de manière solidaire en rotation au moyen d'un dispositif de commutation supplémentaire (49) à l'arbre de transmission principal (6).

23. Procédé selon la revendication 21, **caractérisé en ce que** pour réaliser la deuxième voie de couple, lorsque l'embrayage à griffes (1b, 1c) est fermé, et que le pignon fou (43) de 1a première constante de rapport (K1) est entraîné par le côté de sortie de l'embrayage à griffes (1b, 1c), et que le premier dispositif de commutation (48) est ouvert, le pignon fou (44) de la deuxième constante de rapport (K2) est connecté de manière solidaire en rotation au moyen du dispositif de commutation supplémentaire (49) à l'arbre de transmission principal (6).

24. Procédé selon l'une quelconque des revendications 21 à 23, **caractérisé en ce qu'**après la fermeture de l'embrayage à griffes (1b, 1c), le dispositif de commutation (48) disposé entre la première et la deuxième constante de rapport (K1, K2) est commuté hors de sa position de fermeture sur le pignon fou (44) de la deuxième constante de rapport (K2) dans sa position neutre.

25. Procédé selon l'une quelconque des revendications 21 à 24, **caractérisé en ce qu'**après la commutation du dispositif de commutation (48) dans sa position neutre, l'embrayage de démarrage et de changement de vitesse (la) est fermé.
